(19) Europäisches Patentamt
European Patent Office
Office européen des brevets

(11) EP 4 041 785 B1

(12) EUROPEAN PATENT SPECIFICATION

(45) Date of publication and mention of the grant of the patent:
**25.01.2023 Bulletin 2023/04**

(21) Application number: **21733149.5**

(22) Date of filing: **23.06.2021**

(51) International Patent Classification (IPC):
***C08F 220/14*** *(2006.01)* ***G02B 1/04*** *(2006.01)*
***B29C 45/00*** *(2006.01)*

(52) Cooperative Patent Classification (CPC):
(C-Sets available)
**C08F 220/14; G02B 1/04** (Cont.)

(86) International application number:
**PCT/EP2021/067061**

(87) International publication number:
**WO 2021/259965 (30.12.2021 Gazette 2021/52)**

(54) **OPTICAL GRADE MOULDING COMPOSITIONS HAVING INCREASED THERMAL STABILITY**

FORMZUSAMMENSETZUNGEN MIT OPTISCHER GÜTE MIT ERHÖHTER THERMISCHER STABILITÄT

COMPOSITIONS DE MOULAGE DE QUALITÉ OPTIQUE PRÉSENTANT UNE MEILLEURE STABILITÉ THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2020 EP 20182498**

(43) Date of publication of application:
**17.08.2022 Bulletin 2022/33**

(73) Proprietor: **Röhm GmbH**
**64295 Darmstadt (DE)**

(72) Inventor: **CARLOFF, Rüdiger**
**64291 Darmstadt (DE)**

(74) Representative: **Röhm Patent Association**
**IP Management**
**Deutsche-Telekom-Allee 9**
**64295 Darmstadt (DE)**

(56) References cited:
**FR-A1- 2 699 540** **JP-A- H0 463 810**
**KR-A- 20130 042 676**

- **HIROSHI ITO ET AL.: JOURNAL OF PHOTOPOLYMER SCIENCE AND TECHNOLOGY, 2000, pages 559-589, XP002804179,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

(Cont. next page)

(52) Cooperative Patent Classification (CPC): (Cont.)

C-Sets
**G02B 1/04, C08L 33/12, C08L 33/24;**
C08F 220/14, C08F 222/06, C08F 232/08,
C08F 220/14;
C08F 220/14, C08F 232/08, C08F 222/06,
C08F 220/14

## Description

### Technical field

The present invention relates to a copolymer having increased heat resistance, high transparency and low haze values. The invention further relates to moulding compositions comprising this copolymer and to a process for the manufacturing of this copolymer.

The moulding compositions of the present invention are highly suitable for the manufacturing of optical elements used in various optical devices including primary optics, secondary optics, tertiary optics as well as light guides.

### Prior art

Copolymers comprising repeating units derived from methyl methacrylate (hereinafter MMA), which, for the sake of simplicity are often called polymethyl methacrylate (hereinafter PMMA), are usually transparent materials having a high weathering resistance, in particular, a high resistance against solar UV radiation. If desired, weathering resistance of PMMA can be even further increased by addition of UV absorbers, stabilizers and inhibitors. Hence, PMMA is commonly used in applications where high transparency, low haze and high weathering resistance are required.

There is also a growing demand for polymers with particularly high heat resistance for optical applications. These applications include *e.g.* light sources for indoor and outdoor use comprising high-power LEDs, where such polymers are used as light guides, optical lenses *etc.* In order to increase the light yield of the LEDs, the optical elements are positioned in a close proximity to the LED. Operating temperature of the LED surface, especially of so-called white high-power LEDs, often exceeds 100 °C or sometimes even 130 °C. Accordingly, it is important that materials for these applications have a high transparency and particularly low haze values as well as a high thermal stability. Additionally, the materials should have a high weathering stability and show substantially no signs of yellowing upon a long-term exposure to solar radiation.

Patent application EP 0113105 A1 describes a copolymer of maleic acid anhydride (hereinafter MAH), $\alpha$-methyl styrene and MMA. Although this material has excellent optical properties and good thermal stability, it only has a moderate weathering stability and becomes brittle upon a long-term exposure to solar radiation due to the aromatic group in $\alpha$-methyl styrene.

These drawbacks are partially overcome by a moulding composition described in EP 1 742 997 which comprises PMMA and a terpolymer of MAH, styrene and MMA. However, thermal stability and glass transition temperature of this moulding composition is still not sufficiently high for applications employing strong high-power LEDs. Furthermore, due to the presence of repeating units derived from styrene, weathering resistance of this moulding composition is lower than that of commonly used PMMA. Furthermore, copolymers with building blocks comprising repeating units derived from MAH in combination with vinyl aromatics often have a limited compatibility with PMMA. Consequently, undesired phase separations, accompanied by a significant haze increase may take place.

US 2014/000801 A1 describes a copolymer obtainable by reacting an alkyl(meth)acrylate-based monomer, benzyl methacrylate, and a (meth)acrylic acid monomer by using a continuous bulk polymerization method. The copolymer has also been reported to have a high thermal stability. However, if the content of repeating units derived from (meth)acrylic acid in the copolymer is too high, the copolymer tends to suffer from an undesirably high degree of water absorption and its thermoplastic processing by means of injection moulding becomes difficult due to high adhesion to the injection mould. Furthermore, because of the presence of repeating units derived from benzyl methacrylate, the material has a limited weathering resistance, in particular, at increased operating temperatures.

Patent application JP H4-63810 A describes copolymers obtainable by polymerisation of a mixture of MMA, MAH and 2-norbornene (hereinafter 2-NB). The document states that these copolymers have a higher glass transition temperature than common PMMA. The copolymers of JP H4-63810 A were prepared batchwise in ampoules and, after only a partial polymerisation, the copolymers were isolated and analysed by precipitation in methanol. Apart from a brief indication that the obtained copolymers were transparent, no information is provided in respect to their optical properties, such as yellowness index, haze, or the melt volume rate (MVR). The reported content of MAH in copolymers of Examples 1-3 of JP H4-6381 0 A was 21 mol.-% and more in the precipitated polymer.

Document FR 2 699 540 A1 describes transparent copolymers of vinyl monomers a), e.g. styrene, vinyl chloride or methyl(meth)acrylate, norbornene monomers b), and maleimide monomers c), as well as moulded articles produced thereof. For example, a copolymer is described, which is obtained by free radical solution polymerization of a mixture comprising 79 mol.-% of methyl methacrylate (MMA), 5 mol.% norbornene (NB) and 16 mol.-% N-cyclohexyl maleimide (NCHMI).

Generally speaking, it is well known in the prior art that 2-NB cannot be copolymerized with MMA by free radical polymerization (*cf. e.g.* "Palladium(II)-catalysed polymerization of 5-norbornene-2-carboxylic acid esters and norbornene", Dissertation by B. Heinz, Marburg 1998). Furthermore, it is known that MAH can be copolymerized with MMA

by free radical polymerization with low activity (*cf. e.g.* B.C. Trivedi, B.M. Culbertson Maleic anhydride, Plenum Press, 1982). It has also been reported that 2-NB can be radically copolymerized with MAH (*cf. e.g.* "Fundamental Aspects of Norbornene-Maleic-Anhydride Co and Terpolymers for 193 nm Lithography: Polymerization Chemistry and Polymer Properties", Hiroshi Ito et al., Journal of Photopolymer Science and Technology, 2000, p. 559-589). However, methods for preparation of copolymers comprising MMA, 2-NB and MAH have not been investigated in detail and developed until now.

**Object of the present invention**

Upon consideration of the above described shortcomings, it was an object of the present invention to provide a copolymer having excellent optical properties, in particular a low haze, in combination with high thermal stability. These properties would allow use of the polymer with light sources having high operating temperatures on their surface, e.g. high-power white LEDs. Furthermore, the polymer needs to be suitable for a long-term use upon exposure to UV light and/or increased temperatures and to have a low water absorption and an excellent weathering resistance, in particular, high stability against solar radiation.

A further goal of the present invention was provision of a method of manufacturing such copolymer on industrial scale in an efficient manner.

**Summary of the invention**

The present invention is based on a surprising finding that a copolymer, as defined in claim 1, comprising from 47.0 to 99.8 mol.-% of repeating units derived from methyl methacrylate from 0.1 to 20.0 mol.-% of repeating units derived from the compound represented by formula (I)

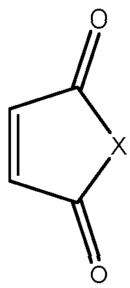

(I)

wherein X is represented by an oxygen atom or N-$R^1$, the substituent $R^1$ being a hydrogen atom or a hydrocarbon group having from 1 to 12 carbon atoms;
from 0.1 to 18.0 mol.-% of repeating units derived from the compound represented by formula (II)

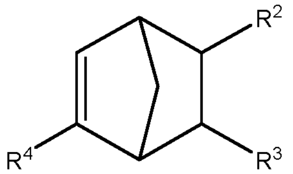

(II)

wherein the substituents $R^2$, $R^3$ and $R^4$ can be independently represented by a hydrogen atom, a hydrocarbon group having from 1 to 12 carbon atoms, a carboxylic group, -C(O)-C1-12-alkyl, - C(O)-C1-12-cycloalkyl, -C(O)-O-C1-12-alkyl or -C(O)-O-C1-12-cycloalkyl; and

wherein $R^3$ and $R^4$ can be independently represented by a hydroxy group or build together a cyclic moiety; and

from 0.0 to 15.0 mol.-% of repeating units derived from an optional co-monomer radically copolymerisable with methyl methacrylate and/or compound represented by the formula (I) and/or the formula (II), the optional co-monomer being preferably an alkyl (meth)acrylate, a methacrylic acid, a (meth)acrylonitrile or an aromatic vinyl monomer

has the desired combination of advantageous properties. This copolymer has low haze and a surprisingly high thermal stability, even in the absence of thermal stabilisers, and can therefore be used for optical application at

increased temperatures. Additionally, the copolymer has an excellent long-term outdoor stability and shows substantially no signs of yellowing, even after a long-time outdoor use.

These results are surprising because the polarity of repeating units derived from the compounds of formula (II) such as 2-NB significantly differs from those of repeating units derived from the compounds of formula (I) such as MAH. Repeating units derived from the compounds of formula (II) are substantially nonpolar, whereas the repeating units derived from the compounds of formula (I) are polar due to presence of an anhydride group or an imide group. Furthermore, it has been expected that during copolymerization of a compound of formula (I) with a compound of formula (II) domains having increased stiffness are formed. Therefore, based on his common general knowledge, the skilled person would normally expect *e.g.* copolymers of MMA, MAH and 2-NB to have a turbid appearance, *i.e.* a high optical haze. The term "*optical haze*" as used herein refers to a value measured according to standard ASTM D1003 - 13 on a 3.0 mm thick specimen.

According to the present invention, the mass average molecular weight Mw of the copolymer is from 40 000 to 300 000 g/mol, more preferably from 50 000 to 200 000 g/mol. The number average molecular weight Mn of the copolymer is preferably 20 000 to 150 000 g/mol, more preferably from 25 000 to 100 000 g/mol. Determination of Mw and Mn can be performed *e.g.* by means of gel permeation chromatography (GPC), for instance using PMMA as a calibration standard and tetrahydrofuran (THF) with 0.2 vol.-% trifluoracetic acid (TFA) as an eluent. As an alternative to using a calibration standard a scattering detector may also be employed for copolymers having Mw of more than 100 000 g/mol (*cf.* H. F. Mark et al., Encyclopaedia of Polymer Science and Engineering, 2nd. Edition, Vol. 10, page 1 et seq., J. Wiley, 1989). Appropriate GPC columns can be readily selected by a skilled person, for example HPS columns. Such columns are, for instance, commercially available from PSS Standards Service GmbH (Mainz, Germany) as columns of the PSS SDV series. As will be readily appreciated, a combination of several GPC columns may also be employed.

## Detailed description of the invention

Surprisingly, the inventor found that the haze value of the copolymer of the present invention can be additionally lowered, if the copolymer preferably comprises

from 55.0 to 98.7 mol.-%, preferably 59 to 98.7 mol.-%, of repeating units derived from methyl methacrylate;
from 1.0 to 18.0 mol.-% of repeating units derived from the compound represented by formula (I) from 0.3 to 15.0 mol.-% of repeating units derived from the compound represented by formula (II); and
from 0.0 to 12.0 mol.-%, preferably 0.0 to 8.0 mol.%, of repeating units derived from an optional co-monomer.

Furthermore, it showed to be even more advantageous in terms of optical properties to choose a copolymer comprising

from 65.0 to 93.0 mol.-%, preferably 67.0 to 93.0 mol.-%, of repeating units derived from methyl methacrylate;
from 5.0 to 16.0 mol.-% of repeating units derived from the compound represented by formula (I) from 2.0 to 12.0 mol.-% of repeating units derived from the compound represented by formula (II); and
from 0.0 to 7.0mol.-%, preferably 0.0 to 5.0 mol.-%, of repeating units derived from an optional co-monomer.

Optical haze of the copolymer of the present invention can also be reduced by a careful adjustment of the ratio of the content of repeating units derived from the compound represented by formula (I) and the content of repeating units derived from the compound represented by formula These contents are adjusted to obey the following relationship:

$$0.3 * p_I \le p_{II} \le 0.9 * p_I$$

wherein $p_I$ is the content of repeating units derived from the compound represented by formula (I), in mol.-%, in the copolymer; and
$p_{II}$ is the content of repeating units derived from the compound represented by formula (II), in mol.-%, in the copolymer.

Furthermore, copolymers with particularly low haze values could be obtained by adjusting $p_I$ and $p_{II}$ to be

$$0.4 * p_I \le p_{II} \le 0.85 * p_I$$

preferably

$$0.5 * p_I \leq p_{II} \leq 0.8 * p_I$$

In this context, the inventor found that since the compounds represented by formula (II) such as 2-NB generally can undergo radical copolymerization with compounds represented by formula (I) such as MAH but not with MMA, a molar ratio $p_{II}$ / $p_I$ of more than 0.9 results in relatively long segments consisting of alternating repeating units derived from the compound represented by formula (I) and repeating units derived from the compound represented by formula (II). If the molecular weight Mw of the copolymer of more than 300 000 g/mol or at a content of a repeating units derived from a compound represented by formula (I) of more than 20.0 mol.-%, it is to be expected that these long chain domains have a reduced miscibility with the acrylic component of the copolymer. This phenomenon appears to be responsible for increased haze values at molar ratios of $p_{II}$ / $p_I$ of more than 0.9, in particular, if the content of the repeating units derived from the compound represented by formula (II) is above 18.0 mol.-%.

A further aspect of the present invention relates to a moulding composition comprising the copolymer of the present invention and, optionally, at least one additive selected from UV absorbers, UV stabilizers, anti-oxidants, colourants, flow improvers, anti-static agents, lubricants and demoulding aids, scattering particles, scratch improving aids etc.

The moulding composition of the present invention has an excellent transparency and a clear, substantially non-cloudy appearance. In particular, haze of the moulding composition measured at 23 °C on an injection moulded specimen having a thickness of 3.0 mm according to standard ASTM D1003 (2013) is normally lower than 5%, preferably lower than 3%, more preferably lower than 2%, particularly preferably lower than 1%.

Furthermore, the moulding composition without colour additives or colouring pigments preferably shows a light transmittance, $T_{D65}$ according to DIN 5033 - 7 (2014) in the range of 85 % to 93 %, more preferably in the range of 87 % to 92 %, measured at 23 °C on an injection moulded specimen having a thickness of 3.0 mm.

The yellowness index of the moulding composition without colour additives or colouring pigments, determinable according to DIN 6167 (1980) (illuminant $D_{65}$, 10° on 3.0 mm layer thickness) should preferably be less than 7, preferably less than 5, measured at 23 °C on an injection moulded specimen having a thickness of 3.0 mm, in the absence of added colourants or pigments.

Vicat softening temperature of the moulding composition according to ISO 306-B50 (2014) is advantageously at least 90°C , preferably at least 100°C , more preferably at least 110°C.

Nominal elongation at break of the moulding composition without impact modifier according to ISO 527 (2012) should preferably be at least 2.0 %, particularly preferably 3.0 % or higher.

Modulus of elasticity of the moulding composition according to ISO 527 (2012) is advantageously greater than 3000 MPa, preferably greater than 3500 MPa, if no impact modifier is present.

Due to its advantageous rheological properties, the moulding composition of the present invention is highly suitable for the manufacturing of optical elements by means of injection moulding. The composition of the present invention typically has a melt volume flow rate MVR measured according to ISO 1133 (2012) at 230 °C and 3.8 kg, of greater than 0.2 $cm^3$ / 10 min, preferably of greater than0.4 $cm^3$ / 10 min, most preferably in the range from 0.6 $cm^3$ / 10 min to 15.0 $cm^3$ / 10 min.

Monomers forming repeating units of the copolymer of the present invention will be described in the following in a greater detail:

**Compound of formula (I)**

The copolymer of the present invention comprises from 0.1 to 20.0 mol.-%, preferably from 1.0 to 18.0 mol.-%, more preferably from 5.0 to 16.0 mol.-%, of repeating units derived from the compound represented by formula (I)

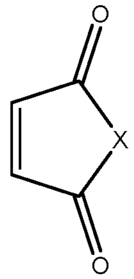

(I)

X in formula (I) may be an oxygen atom or N-$R^1$, the substituent $R^1$ being a hydrogen atom or a hydrocarbon group having from 1 to 12 carbon atoms.

The term "*hydrocarbon group*" as used in the present application encompasses alkyl, cycloalkyl, aryl, aralkyl, alkylaryl groups. These groups may be branched or unbranched. In addition, these groups may have one or several substituents. Substituents are, for example, linear and branched alkyl groups having 1 to 6 carbon atoms, for example methyl, ethyl, propyl, butyl, pentyl, 2-methylbutyl or hexyl; cycloalkyl groups, for example cyclopentyl and cyclohexyl; aromatic groups such as phenyl or naphthyl. Use of substituent $R^1$ being an alkyl or a cycloalkyl group showed to be particularly advantageous in terms of weathering stability of the resulting copolymer.

Preferred alkyl groups include methyl, ethyl, propyl, isopropyl, 1-butyl, 2-butyl, 2-methylpropyl, *tert*-butyl, pentyl, 2-methylbutyl, 1,1-dimethylpropyl, hexyl, heptyl, octyl, 1,1,3,3-tetramethylbutyl, nonyl, 1-decyl, 2-decyl, undecyl and dodecyl group. Preferred cycloalkyl groups include cyclopropyl, cyclobutyl, cyclopentyl, cyclohexyl, cycloheptyl and the cyclooctyl group, each of which may be optionally substituted with one or several branched or unbranched alkyl groups. Aromatic groups preferred in accordance with the invention may derive from phenyl, naphthyl and biphenyl, each of which may also optionally be substituted with one or several branched or unbranched alkyl groups.

Although the choice of the compound of formula (I) is not particularly limited, a compound selected from MAH, maleimide, methylmaleimide, *N*-phenylmaleimide and *N*-cyclohexylmaleimide, leads to copolymers having particularly advantageous properties. In particular, use of MAH and *N*-cyclohexylmaleimide as a compound of formula (I) are most preferable.

**Compound of formula (II)**

The copolymer of the present invention comprises from 0.1 to 18.0 mol.-%, preferably from 0.3 to 15.0 mol.-%, more preferably from 2.0 to 12.0 mol.-% of repeating units derived from the compound represented by formula (II):

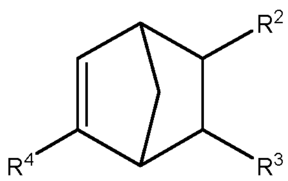

(II)

The substituents $R^2$, $R^3$ and $R^4$ can be independently represented by a hydrogen atom, a hydrocarbon group having from 1 to 12 carbon atoms, a carboxylic group, -C(O)-C1-12-alkyl, - C(O)-C1-12-cycloalkyl, -C(O)-O-C1-12-alkyl or -C(O)-O-C1-12-cycloalkyl. Furthermore, $R^3$ and $R^4$ can be independently represented by a hydroxy group or build together a cyclic moiety.

Meaning of the terms "*hydrocarbon group*", "*alkyl*" and "*cycloalkyl*" is the same as defined above for the substituent $R^1$. Each of the substituents $R^3$ and $R^4$ can be independently *exo*- or *endo*-configurated. The substituents $R^3$ and $R^4$ may also be *cis*- or *trans*-configurated in respect to each other.

The choice of the compound of formula (II) is not particularly limited, as long it can undergo a radical polymerisation with MMA and/or the compound of formula (I). For instance, the compound of formula (II) can be selected from methyl-5-norbornene-2,3-dicarboxylic anhydride, 2-norbornene (2-NB), 5-norbornene-2,3-dicarboxylic anhydride, 5-norbornene-2-carboxylic acid, 5-norbornene-2,3-dicarboxylic acid, (2-hydroxyethyl)-5-norbornene-2-carboxylate, *tert*-butyl-5-norbornene-2-carboxylate, 2-acetyl-5-norbornene, 5-norbornene-2-carboxylic methyl ester, ethyl-5-norbornene-2-carboxylate, *N*-(2-ethylhexyl)-5-norbornene-2,3-dicarboximide, 5-norbornene-2-ol, *N*-hydroxy-5-norbornene-2,3-dicarboxylic imide, 5-norbornene-2-carboxamide, and dimethyl-5-norbornene-2,3-dicarboxylate. In particular, use of 2-NB showed to deliver copolymers with excellent optical properties and high thermal stability.

**Optional co-monomers**

In addition to repeating units derived from MMA, the compound of formula (I) and the compound of formula (II) the copolymer of the present invention may comprise from 0.0 to 15.0 mol.-%, preferably from 0.0 to 12.0 mol.-%, more preferably from 0.0 to 7.0mol.-% of repeating units derived from an optional co-monomer radically copolymerisable with MMA and/or compound represented by the formula (I) and/or the formula (II). The nature of the optional co-monomer is not particularly limited and monomers such as *e.g.* alkyl (meth)acrylate, methacrylic acid, (meth)acrylonitrile or an aromatic vinyl monomer showed to be most suitable for this purpose.

The term "*alkyl(meth)acrylates*" as used herein may stand for a single alkyl(meth)acrylate or a mixture of different alkyl(meth)acrylates. The term "*(meth)acrylate*" as used herein refers not only to methacrylates, *e.g.* methyl methacrylate, ethyl methacrylate, etc., but also acrylates, *e.g.* methyl acrylate, ethyl acrylate etc. and also to mixtures

thereof.

For the purposes of the present invention, preference is given to $C_1$-$C_{18}$-alkyl (meth)acrylates, advantageously $C_1$-$C_{10}$-alkyl (meth)acrylates, in particular $C_1$-$C_4$-alkyl (meth)acrylates. Most preferred alkyl methacrylates encompass methyl methacrylate (MMA), ethyl methacrylate, propyl methacrylate, isopropyl methacrylate, *n*-butyl methacrylate, isobutyl methacrylate, *tert*.-butyl methacrylate, *n*-pentyl methacrylate, *n*-hexyl methacrylate, *n*-heptyl methacrylate, *n*-octyl methacrylate, *n*-isooctyl methacrylate, and *n*-ethylhexyl methacrylate, *n*-nonyl methacrylate, n-decyl methacrylate, and also cycloalkyl methacrylates, for example cyclohexyl methacrylate, isobornyl methacrylate or ethylcyclohexyl methacrylate. Preferred alkylacrylates encompass methyl acrylate, ethyl acrylate, propyl acrylate, isopropyl acrylate, *n*-butyl acrylate, isobutyl acrylate, *tert.*-butyl acrylate, *n*-pentyl acrylate, *n*-hexyl acrylate, *n*-heptyl acrylate, *n*-octyl acrylate, isooctyl acrylate, *n*-nonyl acrylate, *n*-decyl acrylate, and *n*-ethylhexyl acrylate, and also cycloalkyl acrylates, for example cyclohexyl acrylate, isobornyl acrylate or ethylcyclohexyl acrylate.

Examples of suitable aromatic vinyl monomers include styrene; mono- or polyalkylstyrenes such as o-methylstyrene, *m*-methylstyrene, *p*-methylstyrene, *o*,*p*-dimethylstyrene, *o*-ethylstyrene, *m*ethylstyrene and *p*-ethylstyrene; styrene derivatives containing functional groups such as methoxystyrene, ethoxystyrene, vinylbenzoic acid, methyl vinylbenzoate, vinylbenzyl acetate, hydroxystyrene, *o*-chlorostyrene, *p*-chlorostyrene and divinylbenzene; 3-phenylpropylene, 4-phenylbutene and $\alpha$-methylstyrene. Among these, styrene is mostly preferred.

Use of an alkyl acrylate selected from methyl acrylate, ethyl acrylate, butyl acrylate, hexyl acrylate, isobornyl acrylate, ethylhexyl acrylate, vinyl acrylate and acrylic acid as an optional comonomer leads to even a further increase of the thermal stability of the copolymer. Furthermore, methacrylic acid, isobornyl methacrylate, norbornyl methacrylate, *tert*.-butyl methacrylate and alphamethylstyrene can also be used as an optional comonomer. In terms of an optimal balance of optical properties and high thermal stability, the optional co-monomer is preferably selected from a monomer such as methyl acrylate or ethyl acrylate.

If an additional improvement of flowability and/or a particularly low water absorption of the inventive copolymer is desired, styrene or methacrylates such as butyl methacrylate, ethylhexyl methacrylate or aliphatic methacrylates of fatty acid esters such as octylmethacrylate, dodecyl methacrylate, stearyl methacrylate, palmitic methacrylate and other aliphatic C12-C24 methacrylates can also be employed as an optional comonomer.

**Preparation of the copolymer**

A further aspect of the present invention relates to a process for the manufacturing of a copolymer as described above, the process comprising

(a) a polymerisation step, in which a monomer mixture comprising MMA, a compound of formula (I), a compound of formula (II) and, optionally, an optional co-monomer undergoes radical copolymerisation.

Polymerisation step

Radical copolymerisation of monomer mixtures comprising MMA is *per se* well known in the prior art. The polymerization step (a) can employ a method in which polymerization is performed in a state containing said monomer mixture, a polymerization initiator and, optionally, a chain transfer agent and not substantially containing a solvent (bulk polymerization method). Alternatively, a solvent capable of dissolving the copolymer may be present or added during the polymerization (solution polymerization method). The polymerization can also be performed in a dispersed medium where the monomers are dispersed in water or an aqueous mixture.

If a solution polymerization method is employed, the solvent used in the step (a) is not especially limited as long as it is capable of dissolving the copolymer at the polymerization temperature as described before and does not interfere with the polymerisation process except some minor chain transfer. One or more solvents selected from aromatic hydrocarbons, ketones, ethers, esters, amides and alcohols can be used. Examples of a solvent that can be used include but are not limited to publicly known organic solvents such as acetone, methyl ethyl ketone, methyl-*n*-butyl ketone, methyl isobutyl ketone, ethyl isobutyl ketone, tetrahydrofuran, dioxane, dimethylformamide, diethylformamide, dimethylacetamide, diethylacetamide, *N*-methyl pyrrolidone, methanol, ethanol, isopropanol, ethylene glycol, propylene glycol, 2-methoxy-2-propanol and tetraglyme. In particular, solvents selected from toluene, butyl acetate, ethyl acetate, xylene, dimethylfurane or mixtures thereof are preferred. Surprisingly, use of toluene or butyl acetate as solvents in the step (a) showed to deliver copolymers having a particularly high optical transmittance and a low haze.

If the step (a) is performed in a solvent, the solvent content in the reaction mixture typically ranges between 3.0 wt.-% and 60 wt.-%, more preferably between 5.0 wt.-% and 45 wt.-%, based on the total weight of the reaction mixture.

It is further preferred that the dissolved molecular air oxygen ($O_2$) concentration of the reaction mixture in the polymerization step (a) is controlled to be 70 ppm or less, so that the resulting copolymer has a particularly low haze and yellowness index. For further inhibiting the coloration, dissolved oxygen concentration is preferably less than 10

ppm. The dissolved oxygen concentration can be measured using a dissolved oxygen meter (for example, DO Meter B-505 as a galvanic oxygen sensor produced by Iijima Denshi Kogyo K.K.).

During a batch wise preparation, methods for keeping the dissolved oxygen concentration below 10 ppm include passing an inert gas such as nitrogen, argon or helium through the monomers and solvent feed of a reactor the polymerization vessel, bubbling an inert gas directly in the reaction mixture, performing, once or twice or more, operation of pressure-filling the polymerization vessel with an inert gas before initiation of polymerization and subsequently releasing the pressure, deaerating the interior of a sealed polymerization vessel before supplying the monomer feed and subsequently filling with an inert gas, and passing an inert gas through the polymerization vessel. In a continuously operated reactor, monomers as well as solvents in the feed should have concentration of dissolved molecular oxygen below 10 ppm. This can be achieved by passing an inert gas such as nitrogen, argon or helium through the monomers and solvent feed of a reactor.

Choice of a reactor for use in the polymerization step (a) is not particularly limited. Monomers can be added to the reactor as a mixture or as separate feeds. It was found that a copolymer with a particularly low haze can be obtained when the total monomer feed in the polymerisation step (a) typically has the following composition, based on the total amount of polymerizable components:

from 28.0 to 99.7 mol.-% of methyl methacrylate
from 0.1 to 22.0 mol.-% of the compound represented by formula (I)
from 0.2 to 35.0 mol.-% of the compound represented by formula (II); and
from 0.0 to 15.0 mol.-% of an optional co-monomer radically copolymerisable with methyl methacrylate and/or compound represented by formula (I) and/or (II).

The term "*total monomer feed*" as used herein refers to total amounts of monomers added during the polymerisation step (a).

More preferably, the total monomer feed in the polymerisation step (a) has the following composition:

from 36.0 to 98.0 mol.-% of methyl methacrylate
from 1.0 to 21.0 mol.-% of the compound represented by formula (I)
from 1.0 to 33.0 mol.-% of the compound represented by formula (II); and
from 0.0 to 10.0 mol.-% of an optional co-monomer radically copolymerisable with methyl methacrylate and/or compound represented by formula (I) and/or (II),

wherein use of the following the total monomer feed in the polymerisation step (a) is particularly advantageous:

from 42.0 to 95.0 mol.-% of methyl methacrylate
from 3.0 to 19.0 mol.-% of the compound represented by formula (I)
from 2.0 to 31.0 mol.-% of the compound represented by formula (II); and
from 0.0 to 8.0 mol.-% of an optional co-monomer radically copolymerisable with methyl methacrylate and/or compound represented by formula (I) and/or (II).

Surprisingly, it has been further found that optical haze of the copolymer of the present invention can be reduced even further by a careful adjustment of the ratio of the compound represented by formula (I) and the compound represented by formula (II) in the total monomer feed during the polymerisation step (a). In such embodiment, these contents are adjusted to obey the following relationship:

$$0.3 * m_I \leq m_{II} \leq 2.0 * m_I$$

wherein $m_I$ is the content of the compound represented by formula (I), in mol.-%, based on the total amount of polymerizable components, in the monomer feed; and
$m_{II}$, is the content of the compound represented by formula (II), in mol.-%, based on the total amount of polymerizable components, in the monomer feed.

Furthermore, copolymers with particularly low haze values can be obtained by adjusting contents of the compound represented by formula (I) and formula (II) $m_I$ and $m_{II}$ in the monomer feed to be

$$0.5 * m_I \leq m_{II} \leq 1.9 * m_I$$

preferably

$$0.6 * m_I \leq m_{II} \leq 1.8 * m_I$$

Generally, the water absorption of the resulting copolymer tends to decrease with the increasing content of the compound of formula (II) such as 2-NB in the reaction mixture, because this leads to an increased incorporation of repeating units derived from the compound of formula (II) into the copolymer.

The polymerization step (a) can be carried out in a discontinuous reactor (batch) or a semi-batch reactor type, in which initiator, if present, solvent, monomer or a combination of any of those is optionally fed during the polymerization step (a). Alternatively, the polymerization step (a) can be performed in a continuous polymerization process like in stirred tank reactors (CSTR), in a tubular reactor or a combination thereof, in kneaders or in disc ring reactors.

In some embodiments, the polymer reaction mixture from outlet of the first CSTR can be successively continuously supplied to a second and/or third reaction device, as an example a further CSTR or to a tubular reactor in order to increase the conversion. The term "*conversion*" as used in the present application refers to an average weight ratio of the copolymer formed in the polymerisation step (a) to the total monomer feed.

A discontinuous reactor (batch), semi-batch reactor and the CSTR can be equipped with any kind of mixing elements to homogenize the reaction mixture in the reactor. These reactors are also called back-mixed in the literature (Octave Levenspiel, Chemical Reaction Engineering 3rd ed Wiley 1998). In a further embodiment, the discontinuous reactor (batch) contains no mixing elements. The polymerisation step may further take place in cast sheet. If polymerisation is carried out in an aqueous dispersion or suspension, it is particularly advantageous if the monomer represented by Formula I is *N*-substituted maleinimide, *i.e.* X in Formula I is a N-R1 group.

The design of the discontinuous reactor (batch), semi-batch reactor and CSTR is not particularly limited. Typical examples thereof are vessels with installed stirrers where the stirrer shaft is carrying the mixing elements like paddles, blades, anchor or helical mixing elements. The polymerization vessel optionally contains a heated or cooled jacked with circulating hot oil, water or water steam to heat or cool the reaction mixture during polymerization. A further effective way of heat removal is cooling of the reaction mixture by feeding the monomers and or the solvent having a lower temperature than the polymerization temperature. Alternatively the polymerization heat removal can be performed by boiling cooling of the reaction mixture.

The polymerization step (a) can also be carried out in a continuous tubular reactor. A continuous tubular reactor contains at least one inlet port for the monomer or pre-polymer reaction mixture and at least one outlet port for the polymer reaction mixture. The tubular reactor can also be a tubular bundle reactor where the polymerization is performed for example in one or more parallel arranged tubes. An alternative tubular reactor can also be a plate heat exchanger. In contrast to a CSTR, a tubular reactor does not contain a well-mixed or homogenized reaction mixture over the whole reaction volume. A typical tubular reactor as it is defined in the literature (Octave Levenspiel, Chemical Reaction Engineering 3rd ed Wiley 1998) contains large scale concentration gradients between the inlet port area and the outlet port area. The tubular reactor may optionally contain static mixing elements or a stirrer to homogenize the reaction mixture in the radial direction. Examples of static mixing elements include SMX type and SMR type Sulzer tubular mixers, Kenics static mixers, Toray tubular mixer, etc. Alternatively, the tubular reactor may not contain any mixing elements. The polymerization heat removal of the tubular reactor can optionally be performed by a jacket filled with water or hot oil. Alternatively the polymerization heat removal can be done by boiling cooling of the reaction mixture.

The conversion rate can be readily adjusted by a skilled person by adapting the average residence time of the reaction mixture in the reactor, polymerization temperature, reactivity of the initiator used and the amount of the initiator and the monomer concentration in the reactor feed. For instance, if a CSTR is used, the average residence time is preferably selected in range from 10 minutes to 7 hours, more preferably from 20 minutes to 6 hours, for instance from 30 minutes to 4 hours. If the average residence time is shorter than 10 minutes, it becomes necessary to increase the amount of the radical polymerization initiator, making it difficult to control the polymerization reaction. Average residence times above 7 hours are generally disadvantageous in terms of productivity and cost-efficiency.

The polymerization vessel used as a CSTR in the step (a) is not particularly limited, as long as the reaction mixture during the polymerisation step (a) is sufficiently mixed. In order to additionally minimize formation of relatively long segments consisting of alternating repeating units derived from the compound represented by formula (I) and the repeating units derived from the compound represented by formula (II), which appear to be responsible for the haze formation in the resulting copolymer, it is preferred that the feed ratios of MMA, of the compound of formula (I) and of the compound of formula (II) are adjusted in such a way that at any time the reaction mixture in the polymerization vessel has the following composition, based on total amounts of MMA, compound represented by formula (I), compound represented by formula (II) and optional co-monomer:

from 28.0 to 99.7 mol.-% of methyl methacrylate

from 0.1 to 22.0 mol.-% of the compound represented by formula (I)
from 0.2 to 35.0 mol.-% of the compound represented by formula (II); and
from 0.0 to 15.0 mol.-% of an optional co-monomer radically copolymerisable with methyl methacrylate and/or compound represented by formula (I) and/or (II).

Further preferably, feed ratios of MMA, of the compound of formula (I) and of the compound of formula (II) can be adjusted in such a way that at any time the reaction mixture in the polymerization vessel obeys the following relationship, in mol.-%, based on total amounts of MMA, compound represented by formula (I), compound represented by formula (II) and optional co-monomer:

$$0.3 * m_I \leq m_{II} \leq 2.0 * m_I$$

preferably

$$0.5 * m_I \leq m_{II} \leq 1.9 * m_I$$

more preferably

$$0.6 * m_I \leq m_{II} \leq 1.8 * m_I$$

In general, one single polymerization vessel (reactor) can be used in the step (a), or two or more reactors can be used in combination. If several reactors are employed, they may be operated in parallel or be sequentially connected.

The polymerization temperature during the polymerisation step (a) is advantageously kept in a range from 60 °C to 200 °C, more preferably from 70 °C to 180 °C, particularly preferred from 80 °C to 160 °C to avoid an excessive viscosity increase of the reaction mixture in the reactor.

In a further embodiment, the polymerisation step (a) may be performed in a tubular reactor. Both bulk polymerization and solution polymerization can be performed continuously in a tubular reactor with or without mixing elements. It is preferred that the conversion at the outlet of the tubular reactor is kept in a range from 50 to 98 wt.-%, based on the total weight of the monomers added to the reaction mixture. At a conversion below 50 wt.-%, the process becomes disadvantageous from economical point of view. On the other hand, the conversion should not exceed 98 wt.-%, since it unnecessarily increases the average residence time in the tubular reactor. An even more preferred range is from 55 to 96 wt.-%, and a more preferred range is from 60 to 94 wt.-%, in particular, if the tubular reactor is operated in combination with another reactor and is the final polymerization reactor employed in the polymerisation step (a).

Advantageously, the average residence time of the reaction mixture in the tubular reactor is kept in a range from 0.5 to 8 hours. If the average residence time is shorter than 0.5 hours, the conversion remains low. On the other hand, the average residence time in a tubular reactor should not exceed 9 hours for productivity reasons.

As a method for adding a radical polymerization initiator used in the tubular reactor, preferred is a method of adding the radical polymerization initiator together with the feed of the monomers and/or of the solvent into the tubular reactor. Equally preferred is a method of preliminarily mixing the radical polymerization initiator in a static mixer disposed in series to the inlet of the tubular reactor and passing the mixture through said tubular reactor. Furthermore, it is possible and of advantage to add at least some of the monomers and/or the solvent and/or the same or a different type of initiator downstream along the tubular reactor to ensure an even better control of the conversion during the polymerisation step (a) and of the composition of the formed copolymer.

Furthermore, for an improved adjustment of the temperature rise of the reaction mixture, it is preferred to add the radical polymerization initiator at a location immediately before the reaction mixture inlet of the tubular reactor and at one or more further locations inside the reactor. This allows the polymerization to proceed more effectively.

The polymer content in the reaction mixture in a tubular reactor can normally be kept in a range from 50 to 98 wt.-%, more preferably 60 to 96 wt.-%, even more preferably 60 to 94 wt.-% to ensure an efficient polymerisation.

In yet a further embodiment, the polymerisation step (a) can be performed in a tubular loop reactor. The reaction mixture is circulated in a loop of tube, surrounded by a jacket for cooling or heating, and there is a continuous flow of starting material in and product out. The polymer content in the reaction mixture in a tubular loop reactor can normally be kept in a range from 30 to 80 wt.-%, more preferably 40 to 70 wt.-%. The average residence time of the reaction mixture in the tubular loop reactor is typically kept in a range from 0.15 to 3 hours. When a tubular reactor is used to perform further polymerization, it is preferred that the reaction mixture temperature of the tubular reactor is from 60 °C to 250 °C.

In yet a further embodiment, the polymerisation step (a) may be performed in a semi-batch reactor with optionally monomer and/or solvent and/or initiator and /or chain transfer agent feed. The polymerization time is not limited and has to be chosen based on the monomer reactivity. A preferred range of the polymerization time is from 1 hour to 24 hours. A preferred range of the half-life time of decay of the initiators is from 10 seconds to 20 hours.

It is advantageous to use a radical polymerization initiator with a half-life time of decay of from 0.1 to 90 minutes in a batch or in a CSTR at the polymerization temperature. A more preferred range is from 1 to 60 minutes, and the most preferred range is from 2 to 40 minutes. If the half-life time of decay is shorter than 0.1 minute, since the radical polymerization initiator is decomposed before it is uniformly dispersed in the polymerization reactor, the efficiency (initiation efficiency) of the radical polymerization initiator declines. If the amount of the radical polymerization initiator is increased, thermal stability of the resulting copolymer declines. On the other hand, if the half-life time of decay is longer than 90 minutes in the CSTR, polymer lumps (scaling) can be formed in the polymerization vessel, making it difficult to stably operate the polymerization. Additionally, the initiator concentration in the CSTR is accumulated when the half-life time of decay is high, which sometimes may lead to unsafe situations, as the polymerization and the generated polymerization heat can be hardly controlled. That can lead to a run-away of the polymerization temperature in the CSTR.

In the embodiment when the polymerization is performed in a tubular reactor it is advantageous to use a radical polymerization reactor with a half-life time of decay form 1.0 minutes to 10 hours at the polymerization temperature. It is advantageous to supply the tubular reactor with a monomer polymer mixture coming from another tubular reactor or a CSTR and perform only the final polymerization there. In this embodiment, a high initiator half-life time of decay is less critical than in a CSTR as the monomer concentration in the tubular reactor is typically lower than in the CSTR.

One radical polymerization initiator can be used or two or more can also be used as a mixture. In the case where two or more radical polymerization initiators are used in the tubular reactor, it is preferred to use radical polymerization initiators different in 10-hour half-life of decay temperature by 5 °C or more. This allows the polymerization step (a) to proceed more efficiently.

The radical polymerization initiator can be selected, for example, from organic peroxides such as *tert*.-butyl peroxy-3,5,5-trimethylhexanoate, *tert*.-butyl peroxy laurate, *tert*.-butyl peroxy isopropyl monocarbonate, *tert*.-hexyl peroxy isopropyl monocarbonate, *tert*.-butyl peroxy acetate, 1,1-bis(*tert*.-butyl peroxy)-3,3,5-trimethylcyclohexane, 1,1-bis(*tert*.-butyl peroxy)cyclohexane, *tert*.-butyl peroxy 2-ethylhexanoate, *tert*.-butyl peroxy isobutyrate, *tert*.-hexyl peroxy 2-ethylhexanoate, di-*tert*.-butyl peroxide, 2,5-dimethyl-2,5-bis(*tert*.-butyl peroxy) hexane, lauroyl peroxide, benzoyl peroxide, *tert*.-butyl peroxy neodecanoate, *tert*.-butyl peroxy pivalate, *tert*.-butyl peroxy-2-ethylhexanoate, *tert*.-butyl peroxy benzoate and dicumyl peroxide, azo compounds such as 2-(carbamoylazo)-isobutyronitrile, 1,1'-azobis(1-cyclohexanecarbonitrile), 2,2'-azobisisobutyronitrile, 2,2'-azobis(2-methylbutyronitrile), dimethyl 2,2'-azobisisobutyrate, 2,2'-azobis(2,4,4-trimethylpentane), 2,2'-azobis(2-methylpropane), 2,2'-azobis-4-methoxy-2,4-dimethylvaleronitrile and 2,2'-azobis-2,4-dimethylvaleronitrile, and the like.

The amount of the radical polymerization initiator used in the polymerisation step (a) is adjusted depending on the polymerization temperature, polymerization time (average retention time) and intended conversion rate. It is preferred that the amount is from 0.001 to 2.0 wt.-%, based on the total weight of the reaction mixture in the polymerisation step (a). A more preferred range is from 0.01 to 2.0 wt.-%, and even more preferred range is from 0.01 to 1.0 wt.-%.

For the purpose of controlling the molecular weight of the copolymer, it is often advantageous to add from 0.001 to 2.0 wt.-%, more preferably from 0.005 to 2.0 wt.-%, and even more preferably from 0.01 to 1.0 wt.-%, based on the total weight of the reaction mixture in the polymerisation step (a), of a chain transfer agent. Suitable such chain transfer agents *per se* are well-known in the prior art and may be selected from *e.g*. an alkyl mercaptan, carbon tetrachloride, carbon tetrabromide, dimethylacetamide etc. Examples of an alkyl mercaptan used in the polymerisation step (a) include *inter alia n*-octyl mercaptan, *tert*.-dodecyl mercaptan, *n*-dodecyl mercaptan, *n*-tetradecyl mercaptan, *n*-octadecyl mercaptan, etc. Among them, *n*-octyl mercaptan, *n*-dodecyl mercaptan and *n*-methyl mercaptopropionate can be advantageously used.

If the polymerization takes place in a discontinuous batch reactor, as a suspension polymerization or in a cast sheet, the obtained copolymer can have a dispersion of the molecular weight distribution (weight average molecular weight Mw divided by number average molecular weight Mn) of from 1.5 to 6.0. In a more preferred embodiment, the copolymer obtained can have a molecular weight distribution in a range from 1.5 to 4.5. If the polymerization step (a) takes place in a discontinuous semi-batch reactor with an addition of initiator and /or chain transfer agent and/or monomers and / or solvents or in a CSTR and/or a tubular reactor, the copolymer obtained can have a dispersion of the molecular weight distribution (weight average molecular weight Mw/number average molecular weight Mn) of from 1.5 to 5.0. In a more preferred embodiment, the copolymer obtained can have a molecular weight distribution in a range from 1.5 to 4. To obtain a copolymer with improved flowability the obtained copolymer may consist of two or more separate or merging molecular weight peaks in a GPC. The dispersion of the molecular weight distribution (weight average molecular weight Mw/number average molecular weight Mn) is in this case 2.0 to 8.

In one embodiment of the present invention, the polymerization step (a) is carried out in a Continuous Stirred Tank Reactor (CSTR) and the composition and temperature of the reaction mixture can be kept substantially homogenous

by means of a suitable stirrer installed in the polymerization vessel. A CSTR type reactor equipped with a stirrer, in which said stirrer has stirring blades capable of keeping the solution in the vessel substantially completely mixed, is normally used.

The shapes of the stirring blades can be those of publicly known stirring blades. For example, double helical blades, paddle blades, turbine blades, propeller blades, Brumagin blades, multistage blades, anchor blades, max blend blades, puddle blades, MIG blades, the full-zone blades and Logborn blades produced by Kobelco Eco-Solutions Co., Ltd. and the like can be used for this purpose. Above all, double helical ribbon blades are particularly preferred due to their high stirring efficiency. Furthermore, to enhance the stirring effect, it is preferred to install baffles in the polymerization vessel.

Moreover, since the polymerization reaction and the stirring generate heat, the polymerization temperature is normally controlled by heat removal or heating. The temperature can be controlled by such methods as using a jacket or circulating a heating medium for heat transfer, heat removal or heating, or supplying a cooled or heated monomer mixture, etc.

In one preferred embodiment, the copolymer solution obtained in a CSTR is successively continuously supplied into a tubular reactor to perform further polymerization. This reduces the amounts of volatile components which need to be removed in a downstream step, thereby rendering the entire process even more cost-efficient. Additionally, and even more importantly, this combination of two reactors allows even a further improvement of optical properties of the resulting copolymer, in particular, an additional reduction of haze and yellowness index because of a better composition and conversion control of the copolymer. Finally, since the conversion rate in the CSTR can be kept relatively low, the polymerization temperature in the CSTR can be kept low. This additionally leads to increase of thermal stability temperature and Vicat temperature of the resulting copolymer.

The method for supplying the copolymer solution obtained in the CSTR into a second reactor, e.g. a second CSTR, a tubular reactor or a tubular loop reactor is not especially limited. For example, the operation of drawing the reaction mixture from the first CSTR to the second reactor can be performed using a pump. As the liquid feed pump, a publicly known gear pump can be suitably used. If the reaction mixture is drawn by a pump, the reaction mixture can be stably fed into the second reactor, and the pressure in the second reactor, optionally having statically mixing structure portions installed in succession, can be raised to higher than the vapor pressure of the reaction mixture. As a further possibility, the reaction mixture can be transferred from the CSTR into a second reactor by means of pressure difference between the reactors.

It is necessary that the pressure drop in the tubular reactor is low enough in that the tubular reactor inlet pressure subtracted by the pressure drop if gives a value that is higher than the vapor pressure of the reaction mixture at the tubular reactor outlet.

Further, it is possible that as the temperature of the reaction mixture is raised by the heat generation of polymerization, the inner wall temperature sequentially rising from the inlet of the reaction mixture is set in one or more temperature regions in the tubular reactor. This allows the conversion to be raised effectively while inhibiting the sudden decomposition of the radical polymerization initiator. Alternatively, the reaction mixture temperature can be kept substantially constant throughout the tubular reactor.

Furthermore, when the polymerization is further performed in the tubular reactor, it is preferred to add one or more radical polymerization initiators with a half-life of decay of 0.1 to 8 hours at the reaction temperature of the tubular reactor. A more preferred range is 1 to 7 hours. It is not preferred that the half-life of decay of the radical polymerization initiators is above 8 hours since presence of unreacted initiator residues may become problematic during the devolatilization step. On the other hand, it is not preferred that the half-life of decay is too short, because the radical polymerization initiator will be decomposed quickly, not allowing the conversion to be raised sufficiently. As a consequence, a copolymer with a poor thermal stability would be produced. Therefore, it is preferred to use a radical polymerization initiator with a half-life-time of decay of 0.1 hours or longer.

In one embodiment, a tubular reactor optionally having mixing elements is disposed downstream a CSTR. In the CSTR, a continuous polymerization is performed while the monomer conversion is kept at 20 to 70 wt.-%, based on the on the total monomer feed into the CSTR, to continuously produce the copolymer solution (first polymerization substep), and in succession the obtained reaction mixture is continuously drawn by a pump (solution feed substep), or alternatively being fed under pressurization into the tubular reactor. Further in succession in the tubular reactor a radical polymerization initiator, additional monomers or solvent are added while the reaction mixture is passed, for ensuring that the copolymer conversion of all monomers fed into the CSTR and tubular reactor of the present invention in the copolymer solution becomes 50 to 98 wt.-% at the outlet of the tubular reactor (second polymerization substep). In this production method, it is preferred that the copolymer conversion of the reaction mixture obtained in the first polymerization substep is typically controlled in a range from 20 to 70 wt.-%, more preferably from 30 to 65 wt.-%.

The total conversion in the polymerization step (a) is normally at least 40 %, more preferably at least 45 %. The conversion lower than 40 % is disadvantageous for economical reasons. On the other hand, it is not preferred either that the final conversion is higher than 98 % since the polymerization time becomes too long for economical reasons.

A preferred range is 40 to 96 %, and a more preferred range is 45 to 94%. The term "*conversion*" as used herein refers to an average weight ratio of the copolymer formed in the polymerisation step (a) to the total monomer feed.

**Devolatilization step**

According to the present invention, the copolymer solution obtained in the polymerization step (a) can be optionally continuously supplied to a step of heating the copolymer solution to a temperature from 100 °C to 300 °C (heating step (b)).

Subsequently, the material can be supplied to a devolatilization apparatus in the subsequent devolatilization step, to separate and remove the unreacted monomers or the mixture consisting of the unreacted monomers and, if present, the solvent (devolatilization step (c)).

The temperature of the copolymer solution or the melt temperature of the copolymer in the devolatilization step is typically lower than 300 °C, more preferably from 150 °C to 300 °C, even more preferably from 170 °C to 280 °C. The preferred pressure in the last devolatilization zone of the devolatilization step is an absolute pressure, typically below 500 mbar, more preferably below 200 mbar. The lower limit of the absolute pressure in the devolatilization step is not limited, but for technical reasons it is normally at least 10 mbar or higher. If the pressure in the devolatilization step is higher than 500 mbar, even if devolatilization is performed in said temperature range, the unreactive monomers or the mixture consisting of the unreactive monomers and the polymerization solvent cannot be separated or removed efficiently. This is disadvantageous in terms thermal stability, mechanical and optical properties of the resulting copolymer.

As an apparatus for performing such devolatilization, a single screw or a twin-screw extruder, a flash chamber, a degassing kneader or a combination thereof can be used. One embodiment is an apparatus that has a cylindrical container and a stirrer having multiple stirring elements attached to a rotating shaft, and has at least one or more vent holes at the top of the cylindrical portion, a supply port for supplying the copolymer solution at one end of the cylindrical portion and a discharge port for taking out the copolymer after completion of devolatilization at the other end may be used. The number of rotating shafts is not limited but is usually 1 to 5, preferably 1 or 2, and an apparatus having two rotating shafts is more preferred. Particularly, a vented continuous single or twin screw extruder (kneading apparatus and batch type melt kneading apparatus) are preferred, and a single screw extruder, double screw extruder, double screw/single screw combined continuous kneading extruder and triple screw extruder respectively with "Unimelt" type screw(s), and continuous or batch type kneading machine can be mentioned here. Above all, especially a vented single or double screw extruder or a continuous double screw reactor with multiple convex lens type and/or elliptical plate paddles can be preferably used.

Further, the devolatilization step in the production process of this invention can employ a method of using two or more devolatilization apparatuses disposed in series, to perform the devolatilization, and this is advantageous since the remaining volatile component in the copolymer obtained after devolatilization can be decreased even further.

**Moulding composition**

A further aspect of the present invention relates to a moulding composition comprising a copolymer as described above. The moulding composition may contain at least one common polymer additive as long as the later do not adversely affect optical properties of the copolymer of the present invention. Various polymer additives are well known to a skilled person and include *inter alia* UV absorbers, UV stabilizers, light stabilizers, anti-oxidants, colourants, flow improvers, flame retardants, lubricants and de-moulding aids, scattering particles etc. Thermal stability of the resulting moulding composition should not be excessively impaired by these additives.

UV absorbers and UV stabilizers and light stabilizers for use in the present invention are well known and described in detail by way of example in Hans Zweifel, Plastics Additives Handbook, Hanser Verlag, 5th Edition, 2001, p. 141 ff. UV stabilizers are understood to include UV stabilizers and free-radical scavengers. Free radical scavengers are for example sterically hindered phenols like, without restrictions, octadecyl-3-[3,5-di-tert-butyl-4-hydroxyphenyl]propionate], pentaerythritol tetrakis[3-[3,5-di-tert-butyl-4-hydroxyphenyl]propionate. UV absorbers can e.g. derive from the group of the substituted benzophenones, salicylic esters, cinnamic esters, oxanilides, benzoxazinones, hydroxyphenylbenzotriazoles, benzotriazoles, triazines or benzylidenemalonate. The total content of the UV absorbers in the moulding composition typically ranges from 0.01 wt.-% to 1.0 wt.-%, especially from 0.01 wt.-% to 0.5 wt.-%, in particular from 0.02 wt.-% to 0.2 wt.-%, based on the weight of the moulding composition.

The UV absorbers may be present in the moulding composition as low molecular weight compounds. However, UV-absorbing groups in the matrix polymer molecules may also be covalently bonded after copolymerisation with polymerisable UV-absorbing compounds, such as, for example, acrylic, methacrylic or allyl derivatives of benzophenone derivatives or benzotriazole derivatives. As will be readily appreciated by a skilled person, mixtures of chemically different UV absorbers may also be employed, e.g. benzotriazoles in combination with triazines.

The best-known representatives of the UV stabilizers/free-radical scavengers are provided by the group of

hydroxyphenyl benzotriazole or sterically hindered amines (hindered amine light stabilizer, HALS). Examples of suitable free radical scavengers/UV stabilisers include *inter alia* sterically hindered phenols and sterically hindered amines, which are known by the name HALS ((Hindered Amine Light Stabiliser). The tetramethylpiperidine group present in the HALS compounds is responsible for the stabilising effect thereof. This class of compounds may be either unsubstituted or substituted by alkyl or acyl groups on the piperidine nitrogen. The sterically hindered amines do not absorb in the UV range. Examples of hydroxyphenyl benzotriazole are 2-(2H-benzotriazol-2-yl)-p-cresol, sold as Tinuvin® P or Drometrizole. They trap free radicals formed, which once again the UV absorbers are incapable of doing. The free radical scavengers / UV stabilisers are used in the compositions according to the invention in amounts of 0.01 wt.-% to 1.5 wt.-%, especially in amounts of 0.02 wt.-% to 1.0 wt.-%, in particular, in amounts of 0.02 wt.-% to 0.5 wt.-%, based on the weight of the moulding composition. Also a combination of UV stabilisers / absorbers, light stabilizers and antioxidants are possible.

Lubricants and mould release agents which can reduce or completely prevent possible adhesion of the moulding composition to the injection mould are important for the injection moulding process and may also be employed. For example, lubricants, selected from the group consisting of saturated fatty acids, esters or inorganic salts having less than $C_{20}$, preferably $C_{16}$ to $C_{18}$, carbon atoms or of the saturated fatty alcohols having less than $C_{20}$, preferably $C_{16}$ to $C_{18}$, carbon atoms, may be present as auxiliaries. For example, stearic acid, stearyl alcohol, palmitic acid, palmitic alcohol, lauric acid, lactic acid, glycerol monostearate, pentaerythrol, and industrial mixtures of stearic and palmitic acid. Also suitable are *n*-hexadecanol, *n*-octadecanol and industrial mixtures of *n*-hexadecanol and *n*-octadecano and glycerol monostearate. A particularly preferred lubricant or mould release agent is stearyl alcohol. The lubricants are typically used in amounts of not more than 1.0 wt.-%, *e.g.* 0.05 wt.-% to 0.25 wt.-% based on the weight of the moulding composition.

The moulding composition of the present invention can be thermoplastically processed by a common method such as injection moulding and extrusion under usual processing conditions to a moulded article. The injection moulding of the composition can be performed in a known manner at temperatures in the range of from 220 °C to 280 °C (melt temperature) and a mould temperature of preferably from 60 °C to 120 °C. The extrusion is preferably carried out at a temperature of from 220 °C to 280 °C.

Because of its high thermal stability and a low haze, the moulding composition and moulded article made thereof are highly suitable for optical applications such as lighting and glazing. Such applications include light guides, lenses and glazing (for example glass covers for motor vehicle lights, i.e. headlamps or rear lights; covers for automobile lights; further varied lighting applications for building interior and/or exterior lighting which have to meet high demands particularly with regard to vandalism, thermal stability and good processability).

The moulding composition of the invention can be further advantageously used in displays for communication devices, especially PDAs, mobile phones, preferably smartphones; tablet PCs; TV devices; kitchen appliances and other electronic devices.

The following examples illustrate the invention in a greater detail. However, there is no intention that the present invention be restricted to these examples.

**Examples**

**Analysis**

GPC Measurement conditions

| | |
|---|---|
| Eluent: | THF (HPLC-Grade) + 0.2 vol.-% TFA |
| Flow rate: | 1 ml / min |
| Injected volume: | 100 µl |
| Detection: | RI HPS |
| Concentration of sample solution: | 2 g/l |
| Standard: | PMMA |

Product properties

3.0 mm thick specimens were prepared by injection moulding at 250 °C and subsequently stored for 72 h at 23 °C and relative humidity of 50 % before the measurements.

Haze was determined using hazemeter BYK Gardner Hazegard-plus according to ASTM D 1003 (1997).

Optical transmission was measured using a Varian Cary 5000 spectrophotometer according to ISO 13468-2

(2006).

Vicat softening temperature VST ISO 306-B50 (2014) was measured using 3.0 mm thick specimens which were stored for 16 h at 105 °C before the measurements.

The melt flow rate (MVR) was determined according to ISO 1133 (2011) at 230 °C under a load of 3.8 kg.

Product composition

Composition of the copolymers was determined using $^1$H-NMR spectra, recorded on a 400 MHz NMR Spectrometer from Bruker. The content of repeating units derived from the maleic anhydride (MAH) in the copolymers was determined by titration.

The residual monomer content of MMA and 2-norbornene was determined via head space gas chromatography (GC). For the determination of the residual monomer content of MAH, the copolymer granules were dissolved in THF, the polymer was precipitated with MeOH and the filtered THF solution was then analysed using HPLC.

Starting materials

The following starting materials were used:

methyl methacrylate (MMA), purity of > 99.6% from Röhm GmbH, Darmstadt, Germany methyl acrylate (MA), purity > 99 % from Sigma Aldrich, St. Louis, United States maleic anhydride (MAH), purity > 99 % from Sigma Aldrich, St. Louis, United States cyclohexyl maleimide (CHMI) from Nippon Shokubai, Japan
2-norbornene (2-NB), purity of > 99.9% from Topas Advanced Polymers GmbH, Frankfurt, Germany
*n*-dodecylmercaptane (DDM), purity of 98 % from Dr. Spiess Chemische Fabrik GmbH, Kleinkarlbach, Germany
*tert*.-butylperoxy-2-ethylhexanoate (TBPEH), *tert*-butylperneodecanoate (TBPND) and *tert*-butyl-per-3,5,5-trimethylhexanoate (TBPIN), purity of > 98% from Pergan Hilfsstoffe für industrielle Prozesse GmbH, Bocholt, Germany
toluene, purity of 99,8 % from Brenntag AG, Essen, Germany

**Examples 1-4 (inventive)**

Examples 1-4 were carried out in a CSTR. The CSTR was a stirred stainless-steel vessel with a reaction volume of 2.4 litres. CSTR generally allows obtaining products having a relatively narrow distribution of polymeric chain lengths. This simplifies investigation of the relationship between polymer composition and optical properties.

The polymerisation temperature was continuously monitored using a thermocouple and kept constant during polymerisation by heating the reactor jacket with circulating oil. The polymerization temperature was 140 °C.

*n*-Dodecylmercaptane (DDM) was used as a chain transfer agent and *tert*.-butylperoxy-2-ethylhexanoate (TBPEH) was employed as a radical initiator. Compositions of the reactor feed are specified in Table 1.

Table 1. Reactor feed composition in Examples 1-4

| **Reactor feed** | **Example 1** | | **Example 2** | | **Example 3** | | **Example 4** | |
|---|---|---|---|---|---|---|---|---|
| | wt.-% | mol.-% | wt.-% | mol.-% | wt.-% | mol.-% | wt.-% | mol.-% |
| Methyl methacrylate | 55.2 | 58.4 | 61.8 | 66.2 | 55.5 | 58.8 | 50.2 | 52.7 |
| Maleic anhydride | 14.5 | 17.2 | 14.3 | 17.2 | 14.3 | 17.0 | 14.3 | 16.8 |
| 2-Norbornene | 18.9 | 23.4 | 12.5 | 15.6 | 18.8 | 23.3 | 24.1 | 29.6 |
| Methyl acrylate | 0.7 | 0.9 | 0.7 | 1.0 | 0.7 | 0.9 | 0.7 | 0.9 |
| Toluene | 10.7 | | 10.7 | | 10.7 | | 10.7 | |
| DDM | 0.042 | | 0.042 | | 0.042 | | 0.042 | |
| TBPEH | 0.054 | | 0.0275 | | 0.051 | | 0.078 | |
| The mol.-% in table 1 are given based on the total molar amount of monomers. | | | | | | | | |

In order to ensure a steady state operation, the reactors were operated for about 6 hours before material samples were taken.

The continuous copolymer solution outlet of the CSTR was heated to 210 °C in a heat exchanger downstream of the reactor and then devolatilized and pelletized in a single screw extruder with 15 mm screw diameter under an

absolute pressure of 100 mbar.

Operating conditions in Examples 1-4 are summarized in Table 2.

Table 2. Operating conditions in Examples 1-4

| Reaction conditions | Example 1 | Example 2 | Example 3 | Example 4 |
|---|---|---|---|---|
| Reactor residence time, min | 60 | 50 | 60 | 50 |
| Reactor temperature, °C | 140 | 140 | 140 | 140 |
| Conversion, % | 50.7 | 45.9 | 51.1 | 48.6 |
| Copolymer solution temperature in extruder feed, °C | 230 | 210 | 210 | 210 |
| Devolatilization extruder temperature, °C | 260 | 260 | 260 | 260 |
| Devolatilization pressure, mbar | 100 | 100 | 100 | 100 |

The obtained pellets were injection moulded at 250 °C to 3 mm thick platelets for investigation of optical properties and Vicat softening temperature B50, °C according to ISO 306. For all other tests, the pellets were used directly.

Properties and composition of the obtained copolymers are summarized in Table 3.

Table 3. Composition and properties of copolymers obtained in Examples 1-4

| | Example 1 | Example 2 | Example 3 | Example 4 |
|---|---|---|---|---|
| **Copolymer composition** | | | | |
| Methyl methacrylate units, mol.-% | 77.0 | 81.7 | 76.6 | 75.2 |
| Maleic anhydride units, mol.-% | 13.6 | 10.6 | 12.8 | 13.9 |
| 2-Norbornene units, mol.-% | 9.1 | 7.3 | 10.2 | 10.6 |
| Methylacrylate units, mol.-% | 0.4 | 0.4 | 0.4 | 0.4 |
| Molar ratio 2-NB / MAH | 0.67 | 0.68 | 0.80 | 0.77 |
| Residual methyl methacrylate, wt.-% | 0.03 | 0.01 | 0.02 | 0.01 |
| Residual maleic anhydride, wt.-% | 0.34 | 0.9 | 0.31 | 0.33 |
| | | | | |
| **Copolymer properties** | | | | |
| Haze, %, ASTM D1003 | 0.58 | 0.79 | 0.8 | 0.83 |
| Mw, g / mol | 74 700 | 125 000 | 75 400 | 58 400 |
| Mn, g / mol | 40 500 | 63 900 | 42 100 | 30 900 |
| Vicat B50, °C, ISO 306 | 127.5 | 125 | 128.6 | 132 |
| MVR, ml / 10 min at 3.8 kg, ISO 1133 | 6.4 | 1.3 | 5.9 | 11.7 |
| Transmittance, $D_{65}$, ISO 13468-2 | 89.5 | 90.0 | 89.0 | 87.7 |

Copolymers obtained in Examples 1-4 are transparent materials and have an optical haze as low as from 0.58 % to 0.83 %. However, as can be noted from Table 3, optical haze tends to increase with increasing molar ratio of 2-NB to MAH and also with increasing molecular weight of the copolymer.

All copolymers of Examples 1-4 have a low haze and high Vicat temperature and are therefore highly suitable for use in optical elements which can be operated at high temperatures.

**Examples 5-7 (inventive) and Example 8 (comparative)**

In Examples 5-8 the polymerisations were carried out in a batch reactor equipped with monomer and initiator feeds. The batch reactor was an agitated glass reactor with a capacity of 5 litres. The polymerisation temperature was continuously monitored using a thermocouple and kept constant during polymerisation by heating the reactor jacket with

circulating oil.

Dodecylmercaptane (DDM) was used as a chain transfer agent and *tert*.-butylperoxy-2-ethylhexanoate (TBPEH) was employed as a radical initiator.

In the beginning of the reaction monomers and solvent were placed in the reactor and polymerization was started by adding a small amount of the initiator. In order to prevent the viscosity of the reaction mixture of becoming too high with increasing conversion, toluene was continuously dosed during the polymerization. Since the half-life of decay of the initiator is about 40 minutes at the reaction temperature of 95 °C, further TBPEH was continuously supplied to the reaction mixture in the toluene feed. Furthermore, in Examples 5-7, MMA was also continuously supplied to the reaction mixture with the toluene feed. Table 5 provides a comprehensive listing of starting materials employed in the beginning of reactions and in the feeds and Table 4 summarizes the operation conditions.

Table 4. Operating conditions in Examples 5-8

| **Reaction conditions** | **Example 5** | **Example 6** | **Example 7** | **Example 8 (comparative)** |
|---|---|---|---|---|
| Reaction temperature, °C | 95 | 95 | 95 | 95 |
| Feed time, h | 15 | 10 | 15 | 15 |
| Total reaction time, h | 15 | 10 | 15 | 15 |
| Monomer conversion, % | 91.9 | 84.5 | 95.4 | 85.0 |
| Devolatilization extruder temperature, °C | 250 | 250 | 250 | 250 |
| Devolatilization pressure, mbar | 100 | 100 | 100 | 100 |

Subsequently, the obtained copolymer solutions were devolatilized and pelletized in a single screw extruder with 15 mm screw diameter under an absolute pressure of 100 mbar, as described in Examples 1-4.

| | Example 5 | | | Example 6 | | | Example 7 | | | Example 8 (comparative) | | |
|---|---|---|---|---|---|---|---|---|---|---|---|---|
| | Start g | Feed g | Total g | Start g | Feed g | Total g | Start g | Feed g | Total g | Start g | Feed g | Total g |
| Methyl methacrylate | 339.2 | 724.8 | 1064.0 | 425.6 | 638.4 | 1064.0 | 339.2 | 724.8 | 1064.0 | 740 | | 740 |
| Maleic anhydride | 135 | | 140 | 140 | | 140 | 135 | | 140 | 323 | | 323 |
| 2-Norbornene | 182 | | 182 | 182 | | 182 | 182 | | 182 | 323 | | 323 |
| Methyl acrylate | 14 | | 14 | 14 | | 14 | 14 | | 14 | 14 | | 14 |
| Toluene | 100 | 1000 | 1100 | 100 | 1000 | 1100 | 100 | 1000 | 1100 | 89 | 1100 | 1189 |
| DDM | 0.27 | 0.30 | 0.57 | 0.34 | 0.23 | 0.57 | 0.27 | 0.30 | 0.57 | 0.15 | 0.14 | 0.29 |
| TBPEH | 0.35 | 3.75 | 4.10 | 0.28 | 3.22 | 3.5 | 0.3 | 4.35 | 4.65 | 0.21 | 4 | 4.21 |

Table 5. Starting materials employed in the beginning of reaction and in the feed in Examples 5-8

Table 6. Total amounts of starting materials employed in Examples 5-8

| | Example 5 | | Example 6 | | Example 7 | | Example 8 (comparative) | |
|---|---|---|---|---|---|---|---|---|
| | wt.-% | mol.-% | wt.-% | mol.-% | wt.-% | mol.-% | wt.-% | mol.-% |
| Methyl methacrylate | 42.56 | 75.24 | 42.49 | 75.09 | 42.56 | 75.27 | 28.53 | 51.81 |
| Maleic anhydride | 5.40 | 9.75 | 5.60 | 10.10 | 5.40 | 9.75 | 12.45 | 23.09 |
| 2-Norbornene | 7.28 | 13,69 | 7.27 | 13.66 | 7.28 | 13.69 | 12.45 | 24.05 |
| Methyl acrylate | 0.56 | 1.15 | 0.56 | 1.14 | 0.56 | 1.15 | 0.54 | 1.14 |
| Toluene | 44.01 | | 43.9 | | 44.01 | | 45.8 | |
| DDM | 0.023 | | 0.023 | | 0.023 | | 0.011 | |
| TBPEH | 0.164 | | 0.140 | | 0.186 | | 0.162 | |

The mol.-% in table 6 are given based on the total molar amount of monomers.

The obtained pellets were injection moulded at 250 °C to 3 mm thick platelets for investigation of optical properties and Vicat. For all other tests, the pellets were used directly.

Properties and composition of the obtained copolymers are summarized in Table 7.

Table 7. Composition and properties of copolymers obtained in Examples 5-8

| | Ex. 5 | Ex. 6 | Ex. 7 | Ex. 8 (comp.) |
|---|---|---|---|---|
| **Copolymer composition** | | | | |
| Methyl methacrylate units, mol.-% | 81.9 | 82.6 | 82.0 | 59.6 |
| Maleic anhydride units, mol.-% | 10.5 | 10.3 | 10.0 | 22.0 |
| 2-Norbornene units, mol.-% | 6.7 | 6.2 | 7.0 | 17.5 |
| Methylacrylate units, mol.-% | 0.9 | 0.9 | 1.0 | 0.9 |
| Ratio 2-NB / MAH | 0.64 | 0.60 | 0.70 | 0.80 |
| Residual methyl methacrylate, wt.-% | 0.05 | 0.06 | 0.04 | 8.14 |
| Residual maleic anhydride, wt.-% | 0.06 | 0.04 | 0.01 | 0.16 |
| | | | | |
| **Copolymer properties** | | | | |
| Haze, %, ASTM D1003 | 0.46 | 0.49 | 0.8 | 3.0 |
| Mw, g / mol | 84 100 | 112000 | 86 700 | 142 000 |
| Mn, g / mol | 32 900 | 48 300 | 37 300 | 31 000 |
| Vicat B50, °C, ISO 306 | 125 | 124 | 126 | 139 |
| MVR, ml / 10 min at 3.8 kg, ISO 1133 | 6.0 | 2.15 | 5.7 | 0.6 |
| Transmittance, $D_{65}$, ISO 13468-2 | 91.5 | 90.7 | 90.9 | 83.6 |

Copolymers obtained in Examples 5-7 were transparent materials and the copolymer of Example 8 (comparative) had a slightly turbid appearance due to a high MAH content (20 mol.-%). Materials having such a high haze can only be used for relatively thin optical parts. An attempt to use it in thicker parts such as lenses would lead to significant losses due to light scattering. This undesired light scattering can be e.g. visualized by irradiating component with high power LED light.

In contrast to the copolymer of Example 8 (comparative), the copolymers of Examples 5-7 have a low haze and high Vicat temperature and are therefore highly suitable for use in optical elements which can be operated at high temperatures.

**Example 9**

Example 9 was carried out in a CSTR reactor sequentially connected with a tubular reactor. The CSTR was a stirred stainless-steel vessel with a reaction volume of 7.3 litres. The subsequent tubular reactor was a stainless steel tube of 32.8 mm inner diameter and of 15 m length with an external heat oil jacket for cooling and heating the reaction mixture. The tubular reactor was equipped with static mixing elements of SMXL® type from Sulzer Ltd. Winterthur Switzerland.

The reaction mixture was party fed to the CSTR and partly at the beginning of the tubular reactor, where the outlet of the CSTR was fed into the tubular reactor as well.

The copolymer solution outlet of the tubular reactor was heated in a post heater to 200 °C and fed to a 15 mm twin screw extruder where the copolymer solution was devolatilized and pelletized at 100 mbar to remove the not converted monomers and the toluene.

The reactor temperature of the CSTR was 115 °C and the copolymer solution temperature in the tubular reactor was 120 °C.

The resulting polymer was investigated as described above.

For the process control of the CSTR samples were taken from the CSTR copolymer solution outlet which were well dried for 16 hours at 120 °C under 20 mbar to get the pure polymer. The monomer conversion in the CSTR was 63% defined as the amount of dried polymer in the CSTR sample in relation to the feed of the total monomers into the CSTR sample. It was assumed that the toluene did not participate in a noticeable degree in the polymerization so that the weight fraction of toluene in the CSTR sample was the same as in the total CSTR feed. The monomer conversion in the tubular reactor was 81.4 %.

Dodecylmercaptane (DDM) was used as a chain transfer agent and *tert*-butylperneodecanoate (TBPND) and *tert*-butyl-per-3,5,5-trimethylhexanoate (TBPIN) were employed as a radical initiators. Compositions of the reactor feeds are specified in Table 8.

Table 8: Reactor feed composition

| Starting materials | CSTR feed | | | Tubular reactor feed | | | Average total feed | |
|---|---|---|---|---|---|---|---|---|
| | g/h | wt.-% | mol.-% | g/h | wt.-% | mol.-% | wt.-% | mol.-% |
| Methyl methacrylate | 1322 | 54.95 | 60.35 | 980 | 53.55 | 93.14 | 54.35 | 70.99 |
| Maleic anhydride | 373.4 | 15.52 | 17.40 | 0 | 0.00 | 0.00 | 8.2 | 11.76 |
| 2-Norbornene | 454 | 18.87 | 22.04 | 58 | 3.17 | 5.86 | 12.09 | 16.79 |
| Methyl acrylate | 3.8 | 0.6 | 0.20 | 9 | 0.49 | 1.00 | 0.30 | 0.46 |
| Toluene | 250 | 10.39 | | 780 | 42.62 | | 24.32 | |
| DDM | 0.95 | 0.04 | | 0 | 0.00 | | 0.02 | |
| TBPND | 1.5 | 0.06 | | 0 | 0.00 | | 0.04 | |
| TBPIN | 0 | 0.00 | | 3 | 0.16 | | 0.07 | |

The mol.-% in table 8 are given based on the total molar amount of monomers.

The obtained pellets were injection moulded at 250 °C to 3 mm thick plates for investigation of optical properties and Vicat. For all other tests, the pellets were used directly.

Table 9. Composition and properties of copolymers obtained in Example 9

| | **Example 9** |
|---|---|
| **Copolymer composition** | |
| Methyl methacrylate units, mol.-% | 80.4 |
| Maleic anhydride units, mol.-% | 11.2 |
| 2-Norbornene units, mol.-% | 7.6 |
| Methylacrylate units, mol.-% | 0.8 |
| Ratio 2-NB / MAH | 0.68 |

(continued)

| | Example 9 |
|---|---|
| **Copolymer composition** | |
| Residual methyl methacrylate, wt.-% | 0.06 |
| Residual maleic anhydride, wt.-% | 0.12 |
| | |
| **Copolymer properties** | |
| Haze, %, ASTM D1003 | 0.51 |
| Mw, g / mol | 112 000 |
| Mn, g / mol | 48 000 |
| Vicat B50, °C, ISO 306 | 128 |
| MVR, ml / 10 min at 3.8 kg, ISO 1133 | 1.95 |
| Transmittance, $D_{65}$, ISO 13468-2 | 91.3 |

The copolymer of Example 9 has a low haze and high Vicat temperature and is therefore highly suitable for use in optical elements which can be operated at high temperatures.

**Examples 10-13 (comparative)**

Examples 1-4 of patent application JP H4-63810A were reproduced according to the procedures described in JP H4-63810A.

All polymer solutions obtained in Examples 10-13 were turbid and white. Downstream processing of the copolymers was not necessary because the copolymers precipitated already from the copolymer solution in the ampoules. Insolubility of these copolymers is generally problematic in a large-scale production.

Since 2-NB does not radically copolymerize with MMA, increase of the ratio 2-NB to MAH results in longer domains consisting of alternating sequences of repeating units derived from 2-NB and repeating units derived from MAH. This appears to be the reason for the milky appearance of copolymers in Examples 10-13.

Furthermore, at high molecular weights of the polymer or high proportions of maleic anhydride in the PMMA copolymer, it is to be expected that these long chain stiff domains will have a reduced solubility in the PMMA copolymer. This appears to be the case in Example 13. Although the copolymer has a low maleic acid content of only 8 mol.-%, its molecular weight is as high as 729 000 g/mol. As a consequence, the turbid copolymer precipitates out of the reaction mixture.

**Example 14 (inventive)**

Example 14 was carried out in a batch reactor equipped with monomer and initiator feeds identically to examples 5-8 instead that a monomer composition as described in tables 10 and 11 below comprising N-cyclohexylmaleimide (CHMI) instead of maleic anhydride was used. The reaction conditions are identically to example 5 (see table 4 above) with monomer conversion of 94 %.

| | Example 5 | | |
|---|---|---|---|
| | Start g | Feed g | Total g |
| Methyl methacrylate | 562.8 | 375.2 | 938 |
| 2-Norbornene | 196 | | 196 |
| Methyl acrylate | 14 | | 14 |
| Cyclohexyl maleimide | 151.2 | 100.8 | 252 |
| Toluene | 150 | 800 | 950 |
| DDM | 0.32 | 0.15 | 0.47 |
| TBPEH | 0.13 | 3.5 | 3.63 |

Table 10. Starting materials employed in the beginning of reaction and in the feed in Example 14

Table 11. Total amounts of starting materials employed in Example 14

| | Example 14 | |
|---|---|---|
| | wt.-% | mol.-% |
| Methyl methacrylate | 39.85 | 71.96 |
| 2-Norbornene | 8.33 | 15.99 |
| Methyl acrylate | 0.59 | 1.25 |
| Cyclohexyl maleimide | 10.70 | 10.8 |
| Toluene | 40.36 | |
| DDM | 0.020 | |
| TBPEH | 0.154 | |
| The mol.-% in table 11 are given based on the total molar amount of monomers. | | |

The obtained copolymer solutions were processed as described for examples 5-8 and the obtained copolymer was analysed as described above. The test results are summarized in table 12 below.

Table 12. Composition and properties of copolymers obtained in Example 14

| | Ex. 14 |
|---|---|
| **Copolymer composition** | |
| Methyl methacrylate units, mol.-% | 86.71 |
| 2-Norbornene units, mol.-% | 5.06 |
| Methylacrylate units, mol.-% | 0.49 |
| N-cyclohexylmaleimide units, mol.-% | 7.74 |
| Ratio 2-NB / CHMI | 0.65 |
| Residual methyl methacrylate, wt.-% | 0.04 |

(continued)

| | Ex. 14 |
|---|---|
| **Copolymer composition** | |
| Residual N-cyclohexylmaleimide, wt.-% | 0.06 |
| | |
| **Copolymer properties** | |
| Haze, %, ASTM D1003 | 0.9 |
| Mw, g / mol | 112000 |
| Mn, g / mol | 28000 |
| Vicat B50, °C, ISO 306 | 129 |
| MVR, ml / 10 min at 3.8 kg, ISO 1133 | 3.09 |
| Transmittance, $D_{65}$, ISO 13468-2 | 89.4 |

**Example 15 - LED heat storage test**

The copolymer according to example 6 as well as a comparative polycarbonate material (PC) were tested in LED heat storage test.

The polycarbonate material (PC) was a commercially available polycarbonate for LED applications, having a Vicat softening temperature (B50) of 146°C.

The polymer materials were injection moulded to 8 mm × 45 mm round plates. Bars of 40 mm length and 8 mm × 11 mm cross section were cut from the injection moulded round plates. The bars were stored in a small round opening of 10mm × 10mm in a heated metal block at 110°C (for example 6) or 120 °C (for polycarbonate material). One sample was stored for several days without LED illumination while one sample had at one end a white LED (Osram OSTAR LE UW U1A4 01), that illuminated the cross section with 0.1 W/$cm^2$ in 5 mm distance from the bar. The whole metal block has a thickness of 100 mm with round opening running from one side to the other side. Part of the opening length is filled with the bar from the 45mm × 8mm round plate. At various times the samples were taken from the heated block and the transmittance and the yellowness index were measured.

The results are summarized in table 13. The Δ values show the difference of the respective value at the end of test procedure (3504 h or 4521 h) and beginning (0 h), e.g. ΔT = T (3504 h) - T (0 h).

Table 13. Results of LED heat storage test.

| Polymer | | | time [h] | | | | | | | Δ |
|---|---|---|---|---|---|---|---|---|---|---|
| | | | 0 | 96 | 264 | 600 | 2616 | 3096 | 3504 | |
| Ex.6 | 110 °C, no LED light | T [%] | 84.10 | 84.33 | 84.10 | 84.02 | 84.34 | 84.29 | 83.91 | -0.19 |
| | | YI | 19.50 | 18.36 | 16.88 | 15.43 | 16.49 | 17.14 | 17.63 | -1.87 |
| | 110 °C, 0,1W/cm2 | T [%] | 84.23 | 84.79 | 85.40 | 85.65 | 85.97 | 85.27 | 84.65 | 0.42 |
| | | YI | 18.97 | 17.04 | 14.20 | 11.83 | 10.25 | 10.55 | 10.86 | -8.11 |
| | | | time [h] | | | | | | | Δ |
| | | | 0 | 96 | 264 | 600 | 960 | 2688 | 4521 | |
| PC | 120 °C, no LED light | T [%] | 79.02 | 78.58 | 78.55 | 78.11 | 78.25 | 75.67 | 71.20 | -7.81 |
| | | YI | 1.24 | 2.63 | 3.32 | 7.80 | 10.10 | 23.36 | 40.89 | 39,68 |
| | 120 °C, 0,1W/cm2 | T [%] | 79.13 | 79.80 | 80.87 | 81.04 | 81.22 | 80.77 | 77.93 | -1.20 |
| | | YI | 1.40 | 0.14 | 0.29 | 1.47 | 2.88 | 10.11 | 18.65 | 17.25 |

For the inventive material according to example 6, no significant increase in YI and transmittance was observed over 3500 hours without LED light. A slight decline of YI in the first 500 h was observed (without LED light) which is typical and often seen for polymethyl methacrylate polymers. A more significant decline of YI was observed for the inventive material with LED light due to light bleaching effect.

The YI of the polycarbonate comparative material slightly decline in the first about 300 hours with LED light, but a significant incline of YI was observed after about 600 h and at end of testing after about 4500 h with LED light as well as without LED light. The transmittance declines without LED light.

The polycarbonate sample was tested at 120 °C which is 26 K under the Vicat temperature of the material. The inventive polymer (example 6) was tested at lower temperature of 110 °C, however this testing temperature is closer to the Vicat temperature, i.e. only 14 K under the respective Vicat temperature of the copolymer according to example 6. As a consequence, even if the test temperature is different it is demonstrated that the inventive copolymer shows significant better thermal stability and thermal light stability compared to the polycarbonate material based on the respective temperature area providing sufficient dimension stability.

## Claims

1. A copolymer comprising

from 47.0 to 99.8 mol.-% of repeating units derived from methyl methacrylate from 0.1 to 20.0 mol.-% of repeating units derived from the compound represented by formula (I)

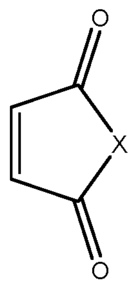

(I)

wherein X is represented by an oxygen atom or N-$R^1$, the substituent $R^1$ being a hydrogen atom or a hydrocarbon group having from 1 to 12 carbon atoms;
from 0.1 to 18.0 mol.-% of repeating units derived from the compound represented by formula (II)

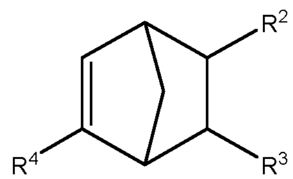

(II)

wherein the substituents $R^2$, $R^3$ and $R^4$ can be independently represented by a hydrogen atom, a hydrocarbon group having from 1 to 12 carbon atoms, a carboxylic group, -C(O)-C1-12-alkyl, -C(O)-C1-12-cycloalkyl, -C(O)-O-C1-12-alkyl or -C(O)-O-C1-12-cycloalkyl; and wherein $R^3$ and $R^4$ can be independently represented by a hydroxy group or build together a cyclic moiety; and
from 0.0 to 15.0 mol.-% of repeating units derived from an optional co-monomer radically copolymerisable with methyl methacrylate and/or compound represented by the formula (I) and/or the formula (II), the optional co-monomer being preferably an alkyl (meth)acrylate, a methacrylic acid, a (meth)acrylonitrile or an aromatic vinyl monomer;

wherein the weight average molecular weight Mw of the copolymer, determined by GPC, is from 40 000 to 300 000 g/mol
and wherein the content of repeating units derived from the compound represented by formula (II) $p_{II}$, in mol.-%, in the copolymer, is described by the following relationship:

$$0.3 * p_I \leq p_{II} \leq 0.9 * p_I$$

wherein $p_I$ is the content of repeating units derived from the compound represented by formula (I), in mol.-%, in the copolymer.

**2.** Copolymer according to Claim 1, wherein

the compound represented by Formula (I) is maleic acid anhydride and
the compound represented by Formula (II) is 2-norbornene.

**3.** Copolymer according to any of Claims 1 to 2, wherein the optional co-monomer is methyl acrylate or ethyl acrylate.

**4.** Copolymer according to any of Claims 1 to 43, wherein Vicat softening temperature according to ISO 306-B50 (2014) is advantageously at least 90 °C, preferably at least 100 °C, more preferably at least 110 °C.

**5.** A process for the manufacturing of a copolymer according to any of Claims 1 to 4 comprising

(a) a polymerisation step, in which a monomer mixture comprising MMA, a compound of formula (I), a compound of formula (II) and, optionally, an optional co-monomer undergoes radical copolymerisation to form a copolymer solution, copolymer dispersion or copolymer suspension.

**6.** Process according to Claim 65, wherein the copolymerisation step (a) is carried out in presence of a solvent which is preferably selected from toluene, butyl acetate, ethyl acetate, xylene, dimethylfurane, methyl ethyl ketone or a mixture of any of those.

**7.** Process according to Claim 5 or 6, wherein the total monomer feed in the polymerisation step (a) has the following composition, based on the total amount of polymerizable components:

from 28.0 to 99.7 mol.-% of methyl methacrylate
from 0.1 to 22.0 mol.-% of the compound represented by formula (I)
from 0.2 to 35.0 mol.-% of the compound represented by formula (II); and
from 0.0 to 15.0 mol.-% of an optional co-monomer radically copolymerisable with methyl methacrylate and/or compound represented by formula (I) and/or (II).

**8.** Process according to any of Claims 5 to 7, wherein the content of the compound represented by formula (II) $m_{II}$, in mol.-%, in the total monomer feed in the polymerisation step (a), is described by the following relationship:

$$0.3 * m_I \leq m_{II} \leq 2.0 * m_I$$

wherein $m_I$ is the content of the compound represented by formula (I), in mol.-%, in the monomer mixture.

**9.** Process according to any of Claims 5 to 8, wherein the polymerization step (a) is carried out in a discontinuously or continuously operated stirred tank reactor, a continuously operated tubular reactor, a discontinuously or continuously operated loop reactor or a combination of any those, and wherein if several reactors are employed, they are operated in parallel or are sequentially connected.

**10.** Process according to any of Claims 5 to 9, wherein the polymerization step (a) is carried out in at least one continuously operated stirred tank reactor sequentially connected with a tubular reactor, wherein the tubular reactor is located downstream from the stirred tank reactor.

**11.** Process according to any of Claims 5 to 10, wherein the conversion in the polymerization step (a) is at least 40%, preferably at least 45%.

**12.** Process according to any of Claims 5 to 11, wherein the polymerisation step (a) is followed by

(b) a step of heating the copolymer solution obtained in the polymerization step (a) to a temperature from 100

°C to 300 °C and
(c) a step of removal of volatile components in a degassing apparatus.

**13.** Moulding composition comprising a copolymer according to any of Claims 1 to 4 and at least one additive selected from UV absorbers, UV stabilizers, anti-oxidants, colourants, flow improver, scattering aids, lubricants, demoulding aids or a combination of any of those.

**14.** Moulded article obtainable from a moulding composition according to Claim 13 by a process selected from injection moulding and extrusion.

**15.** Use of a moulded article according to Claim 14 as an optical element, lamp cover, preferably for room lighting systems or automobile lighting equipment, black coloured pillar trim, electronic component.

## Patentansprüche

**1.** Copolymer, das Folgendes umfasst:

47,0 bis 99,8 mol-% von Methylmethacrylat stammende Repetiereinheiten
0,1 bis 20,0 mol-% Repetiereinheiten, die von der durch Formel (I)

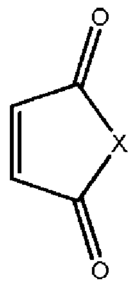

**(I)**

dargestellten Verbindung stammen,
wobei X ein Sauerstoffatom oder N-$R^1$ darstellt, der Substituent $R^1$ ein Wasserstoffatom oder eine Kohlenwasserstoffgruppe mit 1 bis 12 Kohlenstoffatomen ist;
0,1 bis 18,0 mol-% Repetiereinheiten, die von der durch Formel (II)

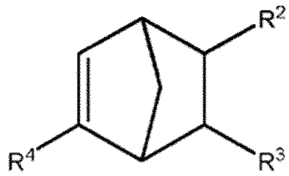

**(II)**

dargestellten Verbindung stammen,
wobei die Substituenten $R^2$, $R^3$ und $R^4$ unabhängig ein Wasserstoffatom, eine Kohlenwasserstoffgruppe mit 1 bis 12 Kohlenstoffatomen, eine Carboxylgruppe, ein -C(O)-C1-12-Alkyl, -C(O)-C1-12-Cycloalkyl, -C(O)-O-C1-12-Alkyl oder -C(O)-O-C1-12-Cycloalkyl darstellen können; und
wobei $R^3$ und $R^4$ unabhängig eine Hydroxygruppe darstellen oder zusammen einen cyclischen Rest bilden können; und
0,0 bis 15,0 mol-% Repetiereinheiten, die von einem optionalen Comonomer stammen, das mit Methylmethacrylat und/oder einer Verbindung dargestellt durch die Formel (I) und/oder die Formel (II) radikalisch copolymerisierbar ist, wobei das optionale Comonomer vorzugsweise ein Alkyl(meth)acrylat, eine Methacrylsäure, ein (Meth)Acrylnitril oder ein aromatisches Vinylmonomer ist;
wobei das mittels GPC bestimmte Massenmittel Mw des Molekulargewichts 40.000 bis 300.000 g/mol beträgt, und
wobei der Gehalt $p_{II}$ in mol-% an Repetiereinheiten im Copolymer, die von der durch Formel (II) dargestellten Verbindung stammen, durch die folgende Beziehung beschrieben wird:

$$0,3 * p_I \leq p_{II} \leq 0,9 * p_I,$$

wobei $p_I$ der Gehalt in mol-% an Repetiereinheiten im Copolymer ist, die von der durch Formel (I) dargestellten Verbindung stammen.

**2.** Copolymer nach Anspruch 1, wobei

die durch Formel (I) dargestellte Verbindung Maleinsäureanhydrid ist und
die durch Formel (II) dargestellte Verbindung 2-Norbornen ist.

**3.** Copolymer nach einem der Ansprüche 1 bis 2, wobei das optionale Comonomer Methylacrylat oder Ethylacrylat ist.

**4.** Copolymer nach einem der Ansprüche 1 bis 3, wobei die Vicat-Erweichungstemperatur gemäß ISO 306-B50 (2014) vorteilhafterweise mindestens 90 °C, vorzugsweise mindestens 100 °C, noch mehr bevorzugt mindestens 110 °C beträgt.

**5.** Verfahren zur Herstellung eines Copolymers nach einem der Ansprüche 1 bis 4, das Folgendes umfasst:

(a) einen Polymerisationsschritt, bei dem ein Monomergemisch, das MMA, eine Verbindung der Formel (I), eine Verbindung der Formel (II) und gegebenenfalls ein optionales Comonomer umfasst, einer radikalischen Copolymerisation unterzogen wird, um eine Copolymerlösung, Copolymerdispersion oder Copolymersuspension zu bilden.

**6.** Verfahren nach Anspruch 5, wobei der Copolymerisationsschritt (a) in Gegenwart eines Lösungsmittels durchgeführt wird, das vorzugsweise aus Toluol, Butylacetat, Ethylacetat, Xylol, Dimethylfuran, Methylethylketon oder einem Gemisch beliebiger davon ausgewählt ist.

**7.** Verfahren nach Anspruch 5 oder 6, wobei die gesamte Monomerzufuhr im Polymerisationsschritt (a) die folgende Zusammensetzung, bezogen auf die Gesamtmenge an polymerisierbaren Komponenten, aufweist:

28,0 bis 99,7 mol-% Methylmethacrylat
0,1 bis 22,0 mol-% der durch Formel (I) dargestellten Verbindung
0,2 bis 35,0 mol-% der durch Formel (II) dargestellten Verbindung und
0,0 bis 15,0 mol-% eines optionalen Comonomers, das mit Methylmethacrylat und/oder einer durch Formel (I) und/oder (II) dargestellten Verbindung radikalisch copolymerisierbar ist.

**8.** Verfahren nach einem der Ansprüche 5 bis 7, wobei der Gehalt $m_{II}$ in mol-% der durch Formel (II) dargestellten Verbindung in der gesamten Monomerzufuhr im Polymerisationsschritt (a) durch die folgende Beziehung beschrieben wird:

$$0,3 * m_I \leq m_{II} \leq 2,0 * m_I,$$

wobei $m_I$ der Gehalt in mol-% der durch Formel (I) dargestellten Verbindung im Monomergemisch ist.

**9.** Verfahren nach einem der Ansprüche 5 bis 8, wobei der Polymerisationsschritt (a) in einem diskontinuierlich oder kontinuierlich betriebenen Rührtankreaktor, einem kontinuierlich betriebenen Röhrenreaktor, einem diskontinuierlich oder kontinuierlich betriebenen Schleifenreaktor oder einer Kombination beliebiger davon durchgeführt wird, und wobei, wenn mehrere Reaktoren verwendet werden, diese parallel betrieben werden oder hintereinander geschaltet sind.

**10.** Verfahren nach einem der Ansprüche 5 bis 9, wobei der Polymerisationsschritt (a) in mindestens einem kontinuierlich betriebenen Rührtankreaktor durchgeführt wird, der mit einem Röhrenreaktor hintereinander geschaltet ist, wobei der Röhrenreaktor stromabwärts vom Rührtankreaktor angeordnet ist.

**11.** Verfahren nach einem der Ansprüche 5 bis 10, wobei der Umsatz im Polymerisationsschritt (a) mindestens 40 %, vorzugsweise mindestens 45 %, beträgt.

**12.** Verfahren nach einem der Ansprüche 5 bis 11, wobei der Polymerisationsschritt (a) gefolgt wird von

(b) einem Schritt des Erwärmens der im Polymerisationsschritt (a) erhaltenen Copolymerlösung auf eine Temperatur von 100 °C bis 300 °C und
(c) einem Schritt des Entfernens flüchtiger Komponenten in einer Entgasungsvorrichtung.

**13.** Formzusammensetzung, die ein Copolymer nach einem der Ansprüche 1 bis 4 und mindestens ein Additiv umfasst, das aus UV-Absorbern, UV-Stabilisatoren, Antioxidantien, farbgebenden Mitteln, Fließverbesserern, Streuungshilfsmitteln, Gleitmitteln, Entformungshilfsmitteln oder einer Kombination beliebiger davon ausgewählt ist.

**14.** Formteil, das aus einer Formzusammensetzung nach Anspruch 13 durch ein aus Spritzgießen und Extrusion ausgewählten Verfahren erhältlich ist.

**15.** Verwendung eines Formteils nach Anspruch 14 als optisches Element, Lampenabdeckung, vorzugsweise für Raumleuchtensysteme oder Kraftfahrzeug-Beleuchtungsanlagen, eine schwarz gefärbte Säulenverkleidung, eine elektronische Komponente.

**Revendications**

**1.** Copolymère comprenant

de 47,0 à 99,8 % en moles de motifs répétitifs issus de méthacrylate de méthyle
de 0,1 à 20,0 % en moles de motifs répétitifs issus du composé représenté par la formule (I)

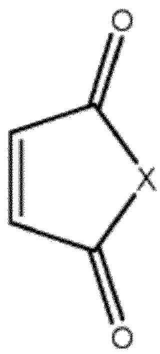

(I)

X étant représenté par un atome d'oxygène ou N-$R^1$, le substituant $R^1$ étant un atome d'hydrogène ou un groupe hydrocarboné possédant de 1 à 12 atomes de carbone ;
de 0,1 à 18,0 % en moles de motifs répétitifs issus du composé représenté par la formule (II)

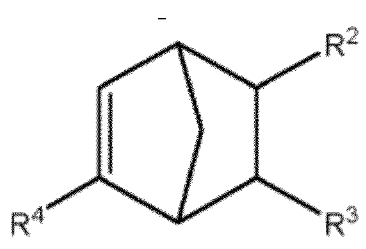

(II)

les substituants $R^2$, $R^3$ et $R^4$ pouvant être indépendamment représentés par un atome d'hydrogène, un groupe hydrocarboné possédant de 1 à 12 atomes de carbone, un groupe carboxylique, -C(O)-$C_{1-12}$-alkyle, -C(O)-$C_{1-12}$-cycloalkyle, -C(O)-O-$C_{1-12}$-alkyle ou -C(O)-O-$C_{1-12}$-cycloalkyle ; et
$R^3$ et $R^4$ pouvant être indépendamment représentés par un groupe hydroxy ou formant ensemble un groupement cyclique ; et
de 0,0 à 15,0 % en moles de motifs répétitifs issus d'un comonomère éventuel copolymérisable de manière radicalaire avec le méthacrylate de méthyle et/ou un composé représenté par la formule (I) et/ou la formule (II),

le comonomère éventuel étant préférablement un (méth)acrylate d'alkyle, un acide méthacrylique, un (méth)acrylonitrile ou un monomère vinylaromatique ;
le poids moléculaire moyen en poids Mw du copolymère, déterminé par GPC, étant de 40 000 à 300 000 g/mole, et la teneur en motifs répétitifs issus du composé représenté par la formule (II) $p_{II}$ en % en moles, dans le copolymère, étant décrite par la relation suivante :

$$0,3 * p_I \leq p_{II} \leq 0,9 * p_I$$

$p_I$ étant la teneur en motifs répétitifs issus du composé représenté par la formule (I), en % en moles, dans le copolymère.

**2.** Copolymère selon la revendication 1,

le composé représenté par la formule (I) étant l'anhydride d'acide maléique et
le composé représenté par la formule (II) étant le 2-norbornène.

**3.** Copolymère selon l'une quelconque des revendications 1 à 2, le comonomère éventuel étant l'acrylate de méthyle ou l'acrylate d'éthyle.

**4.** Copolymère selon l'une quelconque des revendications 1 à 3, une température de ramollissement Vicat selon la norme ISO 306-B50 (2014) étant avantageusement d'au moins 90 °C, préférablement d'au moins 100 °C, plus préférablement d'au moins 110 °C.

**5.** Procédé pour la fabrication d'un copolymère selon l'une quelconque des revendications 1 à 4 comprenant

(a) une étape de polymérisation, dans laquelle un mélange de monomères comprenant du MMA, un composé de formule (I), un composé de formule (II) et, éventuellement, un comonomère éventuel subit une copolymérisation radicalaire pour former une solution de copolymère, une dispersion de copolymère ou une suspension de copolymère.

**6.** Procédé selon la revendication 5, l'étape de copolymérisation (a) étant réalisée en présence d'un solvant qui est préférablement choisi parmi le toluène, l'acétate de butyle, l'acétate d'éthyle, un xylène, un diméthylfuranne, la méthyléthylcétone ou un mélange de quelconques de ceux-ci.

**7.** Procédé selon la revendication 5 ou 6, l'alimentation totale en monomères dans l'étape de polymérisation (a) possédant la composition suivante, sur la base de la quantité totale de composants polymérisables :

de 28,0 à 99,7 % en moles de méthacrylate de méthyle de 0,1 à 22,0 % en moles du composé représenté par la formule (I)
de 0,2 à 35,0 % en moles du composé représenté par la formule (II) ; et
de 0,0 à 15,0 % en moles d'un comonomère éventuel copolymérisable de manière radicalaire avec le méthacrylate de méthyle et/ou un composé représenté par la formule (I) et/ou (II).

**8.** Procédé selon l'une quelconque des revendications 5 à 7, la teneur du composé représenté par la formule (II) $m_{II}$, en % en moles, dans l'alimentation totale en monomères dans l'étape de polymérisation (a), étant décrite par la relation suivante :

$$0,3 * m_I \leq m_{II} \leq 2,0 * m_I$$

$m_I$ étant la teneur du composé représenté par la formule (I), en % en moles, dans le mélange de monomères.

**9.** Procédé selon l'une quelconque des revendications 5 à 8, l'étape de polymérisation (a) étant réalisée dans un réacteur à cuve agitée exploité de manière discontinue ou de manière continue, un réacteur tubulaire exploité de manière continue, un réacteur en boucle exploité de manière discontinue ou de manière continue ou une combinaison de quelconques de ceux-ci, et dans lequel si plusieurs réacteurs sont employés, ils sont exploités en parallèle ou sont reliés de manière séquentielle.

10. Procédé selon l'une quelconque des revendications 5 à 9, l'étape de polymérisation (a) étant réalisée dans au moins un réacteur à cuve agitée exploité de manière continue relié de manière séquentielle à un réacteur tubulaire, le réacteur tubulaire étant situé en aval du réacteur à cuve agitée.

11. Procédé selon l'une quelconque des revendications 5 à 10, la conversion dans l'étape de polymérisation (a) étant d'au moins 40 %, préférablement d'au moins 45 %.

12. Procédé selon l'une quelconque des revendications 5 à 11, l'étape de polymérisation (a) étant suivie par

(b) une étape de chauffage de la solution de copolymère obtenue dans l'étape de polymérisation (a) jusqu'à une température de 100 °C à 300 °C et
(c) une étape d'élimination de composants volatils dans un appareil de dégazage.

13. Composition de moulage comprenant un copolymère selon l'une quelconque des revendications 1 à 4 et au moins un additif choisi parmi des absorbants UV, des stabilisants UV, des antioxydants, des matières colorantes, un agent d'amélioration de l'écoulement, des auxiliaires de diffusion, des lubrifiants, des auxiliaires de démoulage ou une combinaison de quelconques de ceux-ci.

14. Article moulé pouvant être obtenu à partir d'une composition de moulage selon la revendication 13 par un procédé choisi parmi un moulage par injection et une extrusion.

15. Utilisation d'un article moulé selon la revendication 14 en tant qu'élément optique, capot de lampe, préférablement pour des systèmes d'éclairage de pièces ou pour un équipement d'éclairage d'automobile, une garniture de pilier colorée en noir, un composant électronique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0113105 A1
- EP 1742997 A
- US 2014000801 A1
- JP H463810 A
- FR 2699540 A1


### Non-patent literature cited in the description


- **B.C. TRIVEDI.** B.M. Culbertson Maleic anhydride. Plenum Press, 1982
- **HIROSHI ITO et al.** *Journal of Photopolymer Science and Technology,* 2000, 559-589
- **H. F. MARK et al.** Encyclopaedia of Polymer Science and Engineering. J. Wiley, 1989, vol. 10, 1
- **OCTAVE LEVENSPIEL.** Chemical Reaction Engineering. Wiley, 1998
- **HANS ZWEIFEL.** Plastics Additives Handbook. Hanser Verlag, 2001, 141